# EUROPEAN PATENT APPLICATION

(11) **EP 4 819 585 A1**
(43) Date of publication of application: **07.10.2026**
(21) Application number: 24906196.1
(22) Date of filing: 11.12.2024
(51) Int. Cl.: H04L 67/1097, H04L 67/12

(54) **COMMUNICATION METHOD AND APPARATUS**

(30) Priority: 21.12.2023 CN 202311770820
(71) Applicant: Huawei Technologies Co., Ltd., Shenzhen, Guangdong 518129 (CN)
(72) Inventor: XU, Yishan, Shenzhen, Guangdong 518129 (CN); ZHOU, Runze, Shenzhen, Guangdong 518129 (CN); HAN, Zhilin, Shenzhen, Guangdong 518129 (CN)
(74) Representative: Huawei European IPR
(86) International application number: PCT/CN2024/138368
(87) International publication number: WO 2025/130713

(57) **Abstract**

This application relates to a communication method and an apparatus. In the communication method, a first network element may receive inventory operation information, and then send first information and/or second information to a first reader based on the inventory operation information, so that the first reader can flexibly use a suitable inventory mode for inventory, which can better adapt to more flexible inventory requirements in actual scenarios.

## Description

This application claims priority to Chinese Patent Application No. 202311770820.4, filed with the China National Intellectual Property Administration on December 21, 2023 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

In ambient internet of things (ambient IoT, A-IoT) technology, readers can be used to inventory terminals involved in A-IoT technology. When the readers inventory the terminals involved in A-IoT technology, they can only use a fixed inventory mode, which is not flexible enough and cannot adapt to more flexible inventory requirements in actual scenarios.

### SUMMARY

This application provides a communication method and an apparatus, so that a suitable inventory mode can be flexibly used for inventory.

According to a first aspect, a communication method is provided. The method may be performed by a first network element, or by a module (for example, a processor, a chip, or a chip system) for use in the first network element, or by a logical node, a logical module, or software capable of implementing all or a part of functions of the first network element. In the communication method, operation information from a service requester may be received, where the operation information is used to perform an operation on a terminal, and the operation includes an inventory operation. Therefore, first information and/or second information may be sent to a first reader based on the operation information, where the first information is used for the first reader to perform the inventory operation on a first type of terminal, and the second information is used for the first reader to perform the inventory operation on a second type of terminal. Further, an operation result sent by the first reader may further be received, and sent to the service requester, where the operation result includes identifiers of one or more terminals, and the type of the one or more terminals is a first type and/or a second type.

It can be seen that, in the foregoing embodiment, the first network element may receive inventory operation information, and then may send the first information and/or the second information to the first reader based on the inventory operation information, so that the first reader can flexibly use a suitable inventory mode for inventory, which can better adapt to more flexible inventory requirements in actual scenarios.

With reference to the first aspect, optionally, sending the first information and/or the second information to the first reader based on the operation information includes: determining, based on the operation information, a type of a terminal to be operated, where the terminal to be operated includes a first type of terminal and/or a second type of terminal, and the first type is different from the second type; and sending the first information and/or the second information to the first reader based on the type of the terminal to be operated.

It can be seen that, in the foregoing embodiment, the first network element may determine a type of a terminal to be inventoried based on the inventory operation information, and then send the first information and/or the second information to the first reader based on the type of the terminal to be inventoried, so that the first network element can more accurately know which type of terminal the first reader should be triggered to inventory. Therefore, this can reduce a problem of missed inventory or triggering unwanted signaling overheads, and can further ensure inventory efficiency.

With reference to the first aspect, optionally, determining, based on the operation information, the type of the terminal to be operated includes the following: the operation information is carried in a first message, a message name of which indicates the type of the terminal to be operated; or the operation information includes first indication information that indicates the type of the terminal to be operated; or the operation information includes location information corresponding to the terminal to be operated, and the type of the terminal to be operated is determined based on the location information corresponding to the terminal to be operated; or the operation information includes an identifier of the terminal to be operated, and the type of the terminal to be operated is determined based on the identifier of the terminal to be operated; or the operation information includes identifier information indicating the service requester, and the type of the terminal to be operated is determined based on the identifier information indicating the service requester.

It can be seen that, in the foregoing embodiment, the type of the terminal to be operated is indicated by the message name of the first message, which can reduce signaling overheads. The type of the terminal to be operated is indicated by the first indication information in the operation information, which is equivalent to explicitly indicating the type of the terminal to be operated, so that the first network element can quickly know the type of the terminal to be operated, which is more flexible. The type of the terminal to be operated is determined based on the location information corresponding to the terminal to be operated in the operation information, which is equivalent to determining the type of the terminal to be operated within an area indicated by the location information corresponding to the terminal to be operated, so that the first network element can accurately know the type of the terminal to be operated within the area. The type of the terminal to be operated is determined based on the identifier of the terminal to be operated in the operation information, so that the type of the terminal to be operated can be determined more efficiently. The type of the terminal to be operated is determined based on the identifier information indicating the service requester included in the operation information, thereby simplifying what is carried in the operation information and reducing signaling overheads.

With reference to the first aspect, optionally, determining, based on the location information corresponding to the terminal to be operated, the type of the terminal to be operated includes: determining, based on the location information corresponding to the terminal to be operated, a network in which the terminal to be operated is located; and determining, based on the network in which the terminal to be operated is located, the type of the terminal to be operated.

It can be seen that, in the foregoing embodiment, by associating the location information corresponding to the terminal to be operated with the network in which the terminal to be operated is located, the type of the terminal to be operated, in the network in which the terminal to be operated is located, within the area indicated by the location information corresponding to the terminal to be operated can be accurately obtained, so that the first network element can accurately know the type of the terminal to be operated within the area.

With reference to the first aspect, optionally, the network in which the terminal to be operated is located includes a local area network or a non-public network, and the type of the terminal to be operated includes the first type; and/or the network in which the terminal to be operated is located includes a wide area network or a public network, and the type of the terminal to be operated includes the second type.

With reference to the first aspect, optionally, determining, based on the location information corresponding to the terminal to be operated, the type of the terminal to be operated includes: determining, based on the location information corresponding to the terminal to be operated, an operating mode of the terminal to be operated, where the operating mode of the terminal to be operated corresponds to the first type and/or the second type.

It can be seen that, in the foregoing embodiment, the location information corresponding to the terminal to be operated is associated with the operating mode of the terminal to be operated, which is equivalent to predefining which locations specifically correspond to which operating modes. In this way, the first network element may determine the corresponding type based on the operating mode of the terminal to be operated, so that the first network element can more accurately know which type of terminal the first reader should be triggered to inventory. Therefore, this can reduce a problem of missed inventory or triggering unwanted signaling overheads, and can further ensure inventory efficiency.

With reference to the first aspect, optionally, determining, based on the identifier of the terminal to be operated, the type of the terminal to be operated includes: obtaining, based on the identifier of the terminal to be operated, subscription data corresponding to the terminal to be operated, where the subscription data includes the type of the terminal to be operated; or obtaining, based on the identifier of the terminal to be operated, first context information corresponding to the identifier of the terminal to be operated, where the first context information includes an association relationship between the identifier of the terminal to be operated and the type of the terminal to be operated; or obtaining, based on the identifier of the terminal to be operated, second context information corresponding to the identifier of the terminal to be operated, where the second context information includes an association relationship between the identifier of the terminal to be operated and an operating mode of the terminal to be operated, and the operating mode of the terminal to be operated corresponds to the first type and/or the second type.

It can be seen that, in the foregoing embodiment, the first network element can accurately obtain the corresponding subscription data based on the identifier of the terminal to be operated, and obtain the type of the terminal to be operated from the subscription data, so that the first network element can more accurately know which type of terminal the first reader should be triggered to inventory. Therefore, this can reduce a problem of missed inventory or triggering unwanted signaling overheads, and can further ensure inventory efficiency. Alternatively, the first network element can accurately obtain the first context information or the second context information based on the identifier of the terminal to be operated, and obtain, based on the first context information or the second context information, the type of the terminal to be operated, thereby reducing a signaling interaction process with other network elements and improving efficiency in determining the type of the terminal to be operated.

With reference to the first aspect, optionally, the operating mode of the terminal to be operated includes a passive mode, and the operating mode of the terminal to be operated corresponds to the first type; and/or the operating mode of the terminal to be operated includes an active mode, and the operating mode of the terminal to be operated corresponds to the second type.

With reference to the first aspect, optionally, determining, based on the identifier information indicating the service requester, the type of the terminal to be operated includes: obtaining subscription data corresponding to the service requester based on an identifier of the service requester or an address of the service requester, where the subscription data includes the type of the terminal to be operated.

It can be seen that, in the foregoing embodiment, the first network element can accurately obtain the corresponding subscription data based on the identifier of the service requester or the address of the service requester, and obtain the type of the terminal to be operated from the subscription data, so that the first network element can more accurately know which type of terminal the first reader should be triggered to inventory. Therefore, this can reduce a problem of missed inventory or triggering unwanted signaling overheads, and can further ensure inventory efficiency.

With reference to the first aspect, optionally, the first information includes second indication information or mask information, where the second indication information is used to trigger the first reader to send a first select command, so that the first type of terminal within coverage of the first reader responds to the first select command; and the mask information is used to trigger the first reader to send a second select command, so that the first type of terminal corresponding to the mask information responds to the second select command.

It can be seen that, in the foregoing embodiment, the second indication information is used for inventorying the first type of terminal within the coverage of the first reader, which is equivalent to inventorying all terminals of the first type within the coverage of the first reader. This is more efficient. Alternatively, the mask information is used for inventorying the first type of terminal corresponding to the mask information, which is equivalent to inventorying some terminals within the coverage of the first reader, so that the terminals to be inventoried can be more accurately inventoried to the first network element. This is more flexible.

With reference to the first aspect, optionally, the second information includes third indication information or group identifier information, where the third indication information is used to trigger the first reader to send a first paging message, so that the second type of terminal within coverage of the first reader responds to the first paging message; and the group identifier information is used to trigger the first reader to send a second paging message, so that the second type of terminal corresponding to the group identifier information responds to the second paging message.

It can be seen that, in the foregoing embodiment, the third indication information is used for inventorying the second type of terminal within the coverage of the first reader, which is equivalent to inventorying all terminals of the second type within the coverage of the first reader. This is more efficient. Alternatively, the group identifier information is used for inventorying the second type of terminal corresponding to the group identifier information, which is equivalent to inventorying some terminals within the coverage of the first reader, so that the terminals to be inventoried can be more accurately inventoried to the first network element. This is more flexible.

With reference to the first aspect, optionally, the terminal to be operated includes a first terminal, and prior to the obtaining, based on the identifier of the terminal to be operated, the first context information corresponding to the identifier of the terminal to be operated, the method further includes the following: when a second message from the first terminal is received, a type of the first terminal is the second type, and the second message includes an identifier of the first terminal; and the identifier of the first terminal is stored in the first context information in association with the type of the first terminal.

It can be seen that, in the foregoing embodiment, upon detecting the second message from the first terminal, the first network element may know that the type of the first terminal is the second type, and may store, in the first context information, the identifier of the first terminal in association with the type of the first terminal. In this way, the first network element may subsequently know the type of the first terminal based on the identifier of the first terminal, thereby improving efficiency. In addition, the first network element may further determine which type of terminal should be inventoried. This ensures smooth execution of the solution.

With reference to the first aspect, optionally, the terminal to be operated includes a second terminal, and prior to the obtaining, based on the identifier of the terminal to be operated, the second context information corresponding to the identifier of the terminal to be operated, the method further includes: receiving a third message from the second terminal, where the third message includes an identifier of the second terminal; determining first location information corresponding to the second terminal; determining a first operating mode of the second terminal based on the first location information, where the first operating mode is a passive mode or an active mode; and storing, in the second context information, the identifier of the second terminal in association with the first operating mode.

It can be seen that, in the foregoing embodiment, upon receiving the third message from the second terminal, the first network element may determine the first location information corresponding to the second terminal, and determine the operating mode thereof, for example, the first operating mode, so that the first network element may store, in the second context information, the identifier of the first terminal in association with the first operating mode. In this way, the first network element may subsequently know the operating mode of the second terminal based on the identifier of the second terminal, and may further determine which type of terminal should be inventoried. This improves efficiency and ensures smooth execution of the solution.

With reference to the first aspect, optionally, the method further includes: sending third information to the second terminal, where the third information is used for the second terminal to enter the first operating mode.

With reference to the first aspect, optionally, the method further includes: detecting second location information corresponding to the second terminal, where the second location information is different from the first location information; determining a second operating mode of the second terminal based on the second location information, where the second operating mode is a passive mode or an active mode; and sending fourth information to the second terminal, where the fourth information is used for the second terminal to enter the second operating mode.

It can be seen that, in the foregoing embodiment, the first network element may know that the second terminal moves to a new location, for example, the second location information, so that the first network element may re-determine the second operating mode of the second terminal, and indicate the second terminal to enter the second operating mode. This ensures that the operating mode of the second terminal matches the operating mode at the corresponding location, so that a subsequent inventory process can be smoothly performed.

With reference to the first aspect, optionally, the method further includes: updating, in the second context information, the first operating mode to the second operating mode.

According to a second aspect, a communication method is provided. The method may be performed by a service requester, or by a module (for example, a processor, a chip, or a chip system) for use in the service requester, or by a logical node, a logical module, or software capable of implementing all or a part of functions of the service requester. In the communication method, operation information may be sent to a first network element, where the operation information is used to perform an operation on a terminal, and the operation includes an inventory operation. Then, an operation result from the first network element may be received. The operation result includes identifiers of one or more terminals, and a type of the one or more terminals is a first type and/or a second type, the first type being different from the second type. The operation result is determined based on first information and/or second information, the first information is used for a first reader to perform the inventory operation on the first type of terminal, and the second information is used for the first reader to perform the inventory operation on the second type of terminal.

It can be seen that, in the foregoing embodiment, the service requester may send the operation information to the first network element, so that the first network element may send the first information and/or the second information to the first reader based on the inventory operation information, so that the first reader can flexibly use a suitable inventory mode for inventory, which can better adapt to more flexible inventory requirements in actual scenarios.

With reference to the second aspect, optionally, the operation information is further used for the first network element to determine a type of a terminal to be operated. The type of the terminal to be operated is used for the first network element to send the first information and/or the second information to the first reader. The terminal to be operated includes the first type of terminal and/or the second type of terminal.

It can be seen that, in the foregoing embodiment, the first network element may determine a type of a terminal to be inventoried based on the inventory operation information, and then send the first information and/or the second information to the first reader based on the type of the terminal to be inventoried, so that the first network element can more accurately know which type of terminal the first reader should be triggered to inventory. Therefore, this can reduce a problem of missed inventory or triggering unwanted signaling overheads, and can further ensure inventory efficiency.

With reference to the second aspect, optionally, the operation information is carried in a first message, a message name of which indicates the type of the terminal to be operated; or the operation information includes first indication information that indicates the type of the terminal to be operated; or the operation information includes location information corresponding to the terminal to be operated, and the location information corresponding to the terminal to be operated is used to determine the type of the terminal to be operated; or the operation information includes an identifier of the terminal to be operated, and the identifier of the terminal to be operated is used to determine the type of the terminal to be operated; or the operation information includes identifier information indicating the service requester, and the identifier information indicating the service requester is used to determine the type of the terminal to be operated.

It can be seen that, in the foregoing embodiment, the type of the terminal to be operated is indicated by the message name of the first message, which can reduce signaling overheads. The type of the terminal to be operated is indicated by the first indication information in the operation information, which is equivalent to explicitly indicating the type of the terminal to be operated, so that the first network element can quickly know the type of the terminal to be operated, which is more flexible. The type of the terminal to be operated is determined based on the location information corresponding to the terminal to be operated in the operation information, which is equivalent to determining the type of the terminal to be operated within an area indicated by the location information corresponding to the terminal to be operated, so that the first network element can accurately know the type of the terminal to be operated within the area. The type of the terminal to be operated is determined based on the identifier of the terminal to be operated in the operation information, so that the type of the terminal to be operated can be determined more efficiently. The type of the terminal to be operated is determined based on the identifier information indicating the service requester included in the operation information, thereby simplifying what is carried in the operation information and reducing signaling overheads.

According to a third aspect, a communication apparatus is provided, including a unit or a module configured to implement the method according to any one of the embodiments of the first aspect or the second aspect. The communication apparatus may be a first network element or a service requester, or a module (such as a processor, a chip, or a chip system) of the first network element or the service requester, or a logical node, a logical module, or software capable of implementing all or some functions of the first network element or the service requester.

According to a fourth aspect, a communication apparatus is provided. The communication apparatus includes at least one processor. The at least one processor is configured to perform the method according to any one of the embodiments of the first aspect or the second aspect. The communication apparatus may be a first network element or a service requester, or a module (such as a processor, a chip, or a chip system) of the first network element or the service requester, or a logical node, a logical module, or software capable of implementing all or some functions of the first network element or the service requester. The at least one processor may execute a computer program or instructions in a memory, to cause the above-described method to be performed. The memory may be included in the communication apparatus or located outside the communication apparatus. In addition, the communication apparatus may further include an interface.

According to a fifth aspect, a communication system is provided. The communication system includes a first network element and a service requester. The first network element is configured to perform the method according to any one of the embodiments of the first aspect. The service requester is configured to perform the method according to any one of the embodiments of the second aspect.

According to a sixth aspect, a computer-readable storage medium is provided. The computer-readable storage medium stores computer instructions. When the computer instructions are executed, a computer is enabled to perform the method according to any one of the embodiments of the first aspect or the second aspect.

According to a seventh aspect, a computer program product is provided. The computer program product includes computer program code. When the computer program code is run by a computer, the computer is enabled to perform the method according to any one of the embodiments of the first aspect or the second aspect.

### BRIEF DESCRIPTION OF DRAWINGS

FIG. 1 shows a basic architecture of a communication system according to an embodiment of this application;
FIG. 2 is a diagram of a structure of a CN;
FIG. 3 shows a system architecture of an A-IoT;
FIG. 4 is a schematic flowchart of a communication method according to an embodiment of this application;
FIG. 5 is a schematic flowchart of another communication method according to an embodiment of this application;
FIG. 6A and FIG. 6B are a schematic flowchart of another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The technical solutions in embodiments of this application will be described below with reference to the accompanying drawings in embodiments of this application. The terms "system" and "network" may be used interchangeably in embodiments of this application. Unless otherwise specified, "/" indicates an "or" relationship between associated objects. For example, A/B may indicate A or B. In this application, "and/or" indicates an association relationship for describing associated objects and indicates that three relationships may exist. For example, A and/or B may indicate the following three cases: Only A exists, both A and B exist, and only B exists. A and B may be singular or plural. In addition, in the description of this application, "a plurality of" means two or more than two, unless otherwise specified. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between identical or similar items that have basically the same network elements or purposes. A person skilled in the art can understand that the terms such as "first" and "second" are not limiting in terms of the quantity or execution sequence, and the terms such as "first" and "second" do not necessarily indicate a definite difference.

Reference to "an embodiment", "some embodiments", or the like described in embodiments of this application means that one or more embodiments of this application include specific features, structures, or characteristics described with reference to the embodiments. Therefore, statements such as "in an embodiment", "in some embodiments", "in some other embodiments", and "in still other embodiments" that appear at different places in this specification do not necessarily refer to the same embodiment or embodiments. Instead, the statements mean "one or more but not all of embodiments", unless otherwise specifically emphasized. The terms "include", "have", and their variants all mean "include but are not limited to", unless otherwise specifically emphasized.

The objectives, technical solutions, and beneficial effect of this application are further described in detail in the following specific implementations. It should be understood that the following is merely specific implementations of this application, and is not intended to limit the scope of protection of this application. Any modifications, equivalent replacements, improvements, or the like made based on the technical solutions of this application shall fall within the scope of protection of this application.

In embodiments of this application, unless otherwise stated or there is a logic conflict, terms and/or descriptions in different embodiments are consistent and can be mutually referenced, and technical features in different embodiments can be combined to form new embodiments based on their inherent logical relationship.

It should be understood that the technical solutions in embodiments of this application may be applied to a long term evolution (long term evolution, LTE) architecture, 5th generation mobile communications technology (5th generation mobile networks, 5G), the 3rd generation partner project (the 3rd generation partner project, 3GPP) service-based network architecture (service-based architecture, SBA), and the like. The technical solutions in embodiments of this application may also be applied to another future communication system, for example, a 6G communication system. In the future communication system, the function may remain the same, but the name may change.

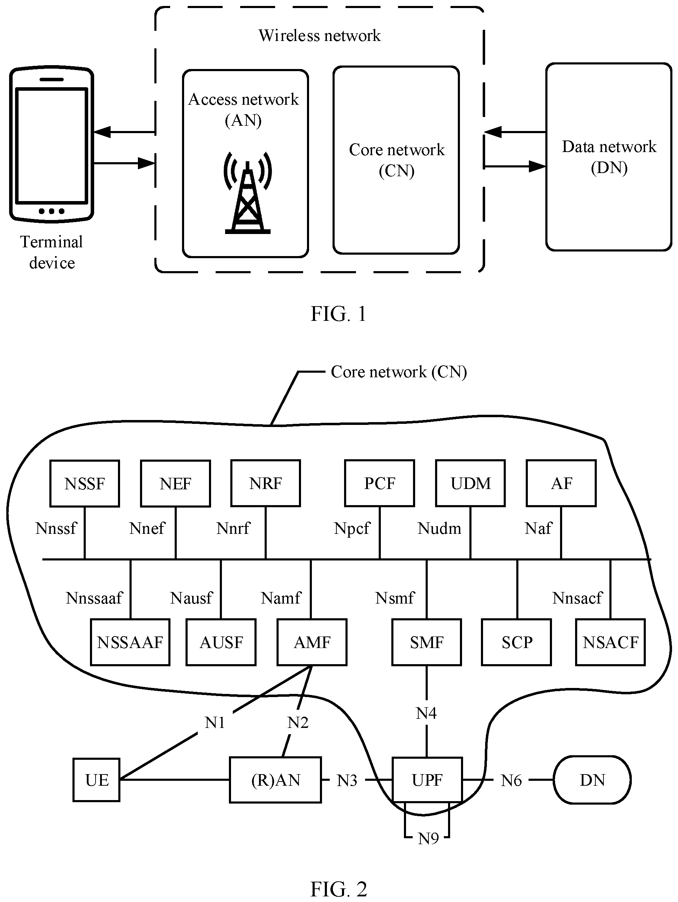

A basic architecture of a communication system provided in an embodiment of this application is described below. As shown in FIG. 1, a terminal may access a wireless network, to obtain a service from an external network (for example, a data network (data network, DN)) via the wireless network, or to communicate with another device, for example, with another terminal, via the wireless network. The wireless network includes a (radio) access network ((radio) access network, (R)AN) and a core network (core network, CN). The (R)AN (described as a RAN below) is used to connect the terminal to the wireless network, and the CN is used to manage the terminal and provide a gateway for communication with the DN. The terminal, the RAN, the CN, and the DN in the system architecture in FIG. 1 are separately described below in detail.

### 1. Terminal

A terminal is an entity on a user side to receive a signal, or to send a signal, or to receive a signal and send a signal. The terminal is used to provide one or both of a voice service and a data connectivity service for users. The terminal may be a device having wireless transmission and reception capabilities and capable of providing communication services to users in conjunction with a RAN. Specifically, the terminal may refer to user equipment (user equipment, UE), an access terminal, a subscriber unit, a subscriber station, a mobile station, a mobile, a remote station, a remote terminal, a mobile device, a terminal, a wireless communication device, a user agent, a user device, or a road side unit (road side unit, RSU). The terminal may also be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device having a wireless communication function, a compute device or another processing device connected to a wireless modem, a vehicle-mounted device, a wearable device (also referred to as a wearable smart device), a virtual reality (virtual reality, VR) terminal, an augmented reality (augmented reality, AR) terminal, a wireless terminal in remote medical (remote medical), a wireless terminal in industrial control (industrial control), a wireless terminal in self driving (self driving), a wireless terminal in a smart grid (smart grid), a wireless terminal in transportation safety (transportation safety), a wireless terminal in a smart city (smart city), a wireless terminal in a smart home (smart home), a home gateway, customer-premises equipment (customer-premises equipment, CPE), or the like. The terminal may be a terminal in a 5G system, or a terminal in a next-generation communication system. This is not limited in embodiments of this application.

The device form of the terminal is not limited in embodiments of this application. An apparatus for implementing a function of the terminal may be the terminal, or may be an apparatus capable of supporting the terminal in implementing the function, for example, a chip system. The apparatus may be installed in the terminal or used in conjunction with the terminal. In embodiments of this application, the chip system may include a chip, or may include a chip and other discrete components.

### 2. RAN

A RAN may include one or more RAN devices (or access network devices). An access network device is an entity on a network side to send a signal, or to receive a signal, or to send a signal and receive a signal.

In a possible scenario, the access network device may be a device having a base station function, for example, an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial access network device in an NTN, that is, a device, a satellite, or the like that can be deployed on a high-altitude platform. The access network device may be a transmission reception point (transmission reception point, TRP), a base station, or a control node in various forms, for example, a network controller or a wireless controller. Specifically, the access network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a Node B (node B, NB), a base station controller (base station controller, BSC), a base transceiver station (base transceiver station, BTS), a home base station (for example, a home evolved nodeB or a home Node B, HNB), a baseband unit (baseband unit, BBU) and a remote radio unit (remote radio unit, RRU) in a distributed base station scenario, a transmission point (transmitting and receiving point, TRP), a transmitting point (transmitting point, TP), a mobile switching center, or the like; or may be an antenna panel of a base station. The control node may be connected to a plurality of base stations, and configure resources for a plurality of terminals covered by the plurality of base stations. A device having a base station function may have different names in systems using different radio access technologies. For example, the access network device may be a gNB in 5G, a network side device in a network after 5G, an access network device in a future evolved public land mobile (communication) network (public land mobile network, PLMN), or a device that assumes a base station function in device-to-device (device-to-device, D2D) communication, machine-to-machine (machine-to-machine, M2M) communication, internet of vehicles communication, or the like. A specific name of the access network device is not limited in this application. The access network device may be a baseband unit pool (BBU pool), an RRU, or the like in an open radio access network (open RAN, O-RAN or ORAN) or a cloud radio access network (cloud radio access network, CRAN).

In another possible scenario, a plurality of access network devices collaborate to assist a terminal device in radio access, with different access network devices each implement a part of functions of a base station. For example, the access network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, in a baseband unit (baseband unit, BBU). The RU may be included in a radio frequency device or unit, for example, included in a remote radio unit (remote radio unit, RRU), an active antenna unit (active antenna unit, AAU), or a remote radio head (remote radio head, RRH). It is to be understood that the access network device may be a CU node, a DU node, or a device including a CU node and a DU node. In addition, the CU may be classified as an access network device in a radio access network RAN, or the CU may be classified as an access network device in a core network CN. This is not limited herein.

In different systems, the CU (or the CU-CP and the CU-UP), the DU, or the RU may also have different names, but a person skilled in the art can understand the meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any of the CU (or the CU-CP or the CU-UP), the DU, and the RU in this application may be implemented by a software module, a hardware module, or a combination of a software module and a hardware module.

In embodiments of this application, a form of the access network device is not limited. An apparatus for implementing a function of the access network device may be the access network device, or may be an apparatus capable of supporting the access network device in implementing the function, for example, a chip system. The apparatus may be installed in the access network device or used in conjunction with the access network device.

### 3. CN

A CN may include one or more CN devices (which may be understood as network element devices or functional network elements (network functions, NFs)).

With reference to FIG. 2, FIG. 2 is a diagram of a structure of a CN according to this application. The CN in FIG. 2 is a CN in a 5G network architecture. The CN shown in FIG. 2 includes a plurality of CN devices, for example, unified data management (unified data management, UDM), a network exposure function (network exposure function, NEF), an application function (application function, AF), an authentication server function (authentication server function, AUSF), and an access and mobility management function (access and mobility management function, AMF) that may be involved in various embodiments of this application. FIG. 1 also involves other network elements, which are not described in detail herein.

The UDM is mainly used for management of subscription data and authentication data of a user, and performing authentication credit processing, user identification handling, access authorization, registration/mobility management, subscription management, short message service management, and the like. In some embodiments, the UDM may further include a unified data repository (unified data repository, UDR). Alternatively, in some other embodiments, the 3GPP SBA in the 5G system may further include a UDR. The UDR is for providing storage and retrieval for a PCF policy, storage and retrieval of structured data for exposure, storage of application function request information for users, and the like.

The NEF is mainly used for supporting secure interaction between a network and a third-party application. The network may securely expose network capabilities and events to a third party by the NEF, to enhance or improve quality of service of the application. In addition, the network may securely retrieve relevant data from the third party by the NEF, to enhance intelligent decision-making of the network. In addition, the NEF supports restoring structured data from the UDR or storing structured data to the UDR.

The AF is mainly used for supporting interaction with the core network to provide services, for example, influence on traffic routing decision-making and a policy control function, or providing some third-party services to a network side.

The AUSF is responsible for user authentication, to determine whether the user or the device is allowed to access the network.

The AMF is a control plane function provided by an operator network, and is responsible for access control and mobility management for a terminal accessing the operator network, for example, including functions such as mobility state management, assignment of a temporary user identity, and user authentication and authorization.

The CN devices may also be referred to as network elements or functional network elements. In a 5G communication system, the functional network elements may have the names of the functional network elements shown in FIG. 2. In an evolved communication system after 5G (for example, a 6G communication system), the functional network elements may still have the names of the functional network elements shown in FIG. 2, or may have other names. For example, in a 5G communication system, the network exposure function network element may be an NEF. In an evolved communication system after 5G (for example, a 6G communication system), the network exposure function may still be the NEF, or may have another name. This is not limited in this application.

In FIG. 2, Npcf, Nnef, Nudm, Naf, Namf, Nsmf, N1, N2, N3, N4, N6, and N9 are interface identifiers. For the meanings of these interface identifiers, refer to the definitions in related standard protocols. This is not limited herein.

### 4. DN

A DN, also referred to as a packet data network (packet data network, PDN), is a network located outside the operator network. The operator network may access a plurality of DNs. Application servers (application server, AS) corresponding to a plurality of services may be deployed in the DN, to provide a plurality of possible services for a terminal.

With reference to FIG. 1 and FIG. 2, an example of an A-IoT system architecture is provided below, including a terminal, a reader (reader), a first network element, a second network element, and a service requester. The terminal may communicate with the reader, the reader may communicate with the first network element, the first network element may communicate with the second network element, and the second network element may communicate with the service requester.

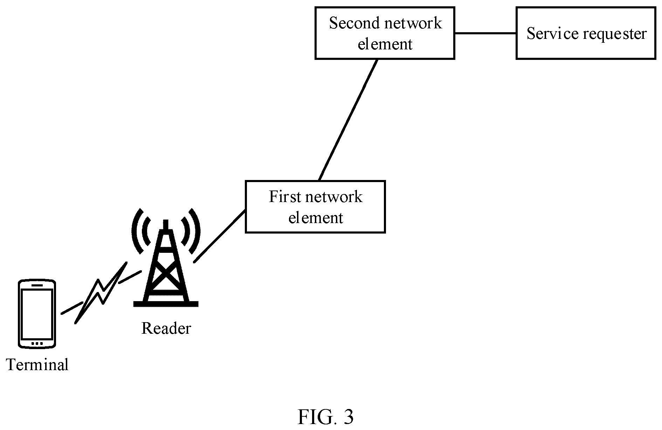

Optionally, the communication system may further include a third network element and a fourth network element (not shown in FIG. 3). The first network element may communicate with the third network element and the fourth network element.

The network elements involved in the communication system in FIG. 3 are separately described below in detail.

### 1. Terminal

The terminal in FIG. 3 may be the terminal in FIG. 1 and FIG. 2. Optionally, the terminal may be a passive device (passive device or type A device), a semi-passive device (semi-passive device or type B device), a semi-active device (semi-active device), or an active device (active device or type C device). In this case, the terminal mentioned in this application may also be referred to as an internet of things terminal, an internet of things device, an ambient internet of things device, an ambient power harvesting internet of things terminal, or the like. The name of the terminal is not limited in this application. The terminal is used as an example below for description.

Optionally, the passive device may also be referred to as a passive terminal, a passive internet of things device, or the like. The semi-passive device may also be referred to as a semi-passive terminal, a semi-passive internet of things device, or the like. The semi-active device may also be referred to as a semi-active terminal, a semi-active internet of things device, or the like. The active device may also be referred to as an active terminal, an internet of things device, or the like. The passive terminal, the semi-passive terminal, the semi-active terminal, and the active terminal are used as examples below for description.

The passive terminal, the semi-passive terminal, and the semi-active terminal are capable of communication by reflecting a carrier; that is, they need to rely on an external carrier source for communication. The passive terminal may or may not have an energy storage capacitor. A passive terminal having no energy storage capacitor is capable of communication by harvesting ambient energy, for example, radio frequency energy. The semi-passive terminal and the semi-active terminal may have a power amplifier, and therefore have a longer communication range than the passive terminal. The semi-passive terminal and the semi-active terminal usually have an energy storage capacitor, and can store in the capacitor ambient energy, such as solar energy or radio energy. The name of the passive terminal is not limited in this application.

The active terminal can actively generate a carrier (or can be understood as having a carrier recovery capability), and does not rely on an external carrier source for communication. Therefore, the active terminal is capable of active communication. In a possible implementation, the active terminal may also have an energy storage capacitor, and can store in the capacitor ambient energy, such as solar energy or radio energy. The name of the active terminal is not limited in this application.

The terminal may be in a tag form, or in any other terminal form, for example, a sensor, a license plate, or a nameplate. The device form of the terminal is not limited in embodiments of this application. An apparatus for implementing a function of the terminal may be the terminal, or may be an apparatus capable of supporting the terminal in implementing the function, for example, a chip system. The apparatus may be installed in the terminal or used in conjunction with the terminal. In embodiments of this application, the chip system may include a chip, or may include a chip and other discrete components.

### 2. Reader (reader)

The reader uses radio frequency for non-contact bidirectional data communication, and uses radio frequency to perform read and write operations on a terminal, so as to identify the terminal for data exchange. In other words, the reader uses a radio frequency signal or a wireless signal to interact with the terminal. It has two operating modes. One is that when a terminal (for example, a passive terminal) enters a valid identification range of the reader, the terminal receives a radio frequency signal sent by the reader, and sends information stored in a chip using energy harvested from an induced current. The other is that a terminal (for example, a semi-passive terminal, a semi-active terminal, or an active terminal) can store a part of electric energy from solar energy or the like, which allows the terminal to actively send a signal of a specific frequency; and the reader receives and decodes information, and then sends the information to a central information system for relevant data processing.

It should be understood that the name of the reader is not limited in this application. The reader may be named a reader/writer or another name. That is, it can be understood that the names of the reader and the reader/writer are interchangeable. The reader herein has a function related to the reader in this application. For example, the reader has a function of performing an operation (for example, obtaining an identifier of the terminal, an inventory operation (or referred to as an inventorying operation), a read operation, a write operation, an invalidation operation, or a message interaction operation with a tag) described in this application, and has a function of obtaining charging related information and/or charging information and sending the charging information to a charging function, and the like.

In this application, the identifier of the terminal may be assigned by an enterprise (that is, it is written into the terminal when the enterprise prints the terminal), or may be assigned by an operator. In a possible implementation, the identifier of the terminal may be a unique identifier, for example, an electronic product code (electronic product code, EPC), a subscription permanent identifier (subscription permanent identifier, SUPI), a radio network temporary identifier (Radio Network Temporary Identifier, RNTI), a permanent equipment identifier (permanent equipment identifier, PEI), a subscription concealed identifier (subscription concealed identifier, SUCI), or a 5G globally unique temporary identifier (5G-globally unique temporary identity, 5G-GUTI). Alternatively, the identifier of the terminal may be a temporary identifier.

For example, herein, an example in which the terminal is a tag is used to describe a function that the reader may have. For example, the reader may send a message to the terminal, for example, a message from the service requester or a message from a core network device, where the message may be, for example, an operation message. Alternatively, the reader may send information from the tag, for example, an identifier of the tag, to the core network device or the service requester. Specifically, the reader may obtain information stored in a specified tag according to the operation message issued by the core network device or the service requester. For example, the operation message indicates to perform an inventory operation on the terminal, and the reader obtains the identifier of the tag. For example, the operation message indicates to perform a read operation on the terminal, and the reader may read data in a storage area of the tag. Optionally, in some scenarios where information stored in the tag needs to be rewritten, the reader may have a write function. For example, the operation message indicates to perform a write operation on the terminal, and the reader may write data into the storage area of the tag. Optionally, the reader may perform an invalidation operation on the tag. After the invalidation operation is performed, the tag is invalidated, and an operation like obtaining the identifier of the tag, an inventory operation, a read operation, an operation of message interaction with the tag, or a write operation cannot be performed. In a possible implementation, that the obtaining of the identifier of the tag cannot be performed due to the tag being invalidated may be understood as that after the tag is invalidated, the reader cannot obtain the identifier of the invalidated tag. In another possible implementation, that the operation of message interaction with the tag cannot be performed due to the tag being invalidated may be understood as that after the tag is invalidated, the reader cannot perform message interaction with the invalidated tag.

In a possible implementation, the inventory or the inventory operation in this application may be understood as paging, or may be interchanged with paging.

The reader mentioned in this application may be the access network device, a pole site, or the like in FIG. 1 and FIG. 2. Alternatively, the reader may be the terminal in FIG. 1 and FIG. 2. In embodiments of this application, the form of the reader is not limited. An apparatus for implementing a function of the reader may be the access network device or the terminal, or may be an apparatus capable of supporting the access network device or the terminal in implementing the function, for example, a chip system. The apparatus may be installed in the access network device or the terminal, or the apparatus may be used in conjunction with the access network device or the terminal.

### 3. First network element

The first network element is used to perform at least one of the following functions on the terminal, such as access control, mobility management, security authentication, data transmission (for example, internet of things service transmission), message transmission (for example, internet of things service message transmission), and internet of things terminal management.

For example, the first network element may be an access and mobility management function, which may be referred to as an access and mobility management device, an access and mobility management function entity, an access and mobility management function network element, a mobility management device, an access management device, a mobility management network element, a mobility management entity, an AMF, or the like, and is a type of core network device. The device may be used to manage access control and mobility of the user equipment. In actual application, the device includes an access and mobility management function in a mobility management entity (mobility management entity, MME) in an LTE network framework, with an access management function added. The device may be specifically responsible for registration, mobility management, a tracking area update procedure, reachability detection, session management network element selection, mobility state transition management, and the like of the user equipment. For example, in 5G, the access and mobility management network element may be the AMF. In future communication, for example, in 6G, the access and mobility management network element may still be the AMF, or may have another name. This is not limited in this application. When the access and mobility management network element is the AMF, the AMF may provide an Namf service.

For another example, the first network element may be used to perform functions such as terminal management, terminal data processing, and terminal data routing. The first network element may parse a message from the service requester, determine a reader that executes the message, and instruct the reader to perform a terminal operation or instruct the reader to perform a random access procedure for the terminal. Data from the terminal is received by the reader, terminal data processing is optionally performed, and data of the terminal is sent to the service requester. The first network element may be a tag management function (tag management function, TMF), a tag management device, an internet of things management function (IoT management function, IMF), an internet of things terminal management function, an ambient power harvesting internet of things terminal management function (ambient IoT management function, AITMF), an ambient power harvesting internet of things management device, an ambient power-enabled internet of things function (ambient IoT function, AIoTF), an ambient power-enabled internet of things terminal management function, an ambient power-enabled internet of things management function, or an ambient internet of things management function (ambient IoT management function, AIoTMF). The name of the first network element is not limited in this application. The TMF is used as an example below for description.

The TMF may have an interface with the reader, or may interact with the reader via the AMF. Optionally, the TMF may be co-deployed with the AMF, or may be independently deployed.

### 4. Second network element

The second network element is mainly used for supporting secure interaction between a network and a third-party application (for example, the service requester). The network may securely expose (or open) network capabilities and events to a third party by the second network element, to enhance or improve quality of service of the application. In addition, the network may securely retrieve relevant data from the third party by the second network element, to enhance intelligent decision-making of the network. In addition, the second network element supports restoring structured data from the UDR or storing structured data to the UDR.

For example, the second network element may be an NEF, which may be referred to as a network exposure device, a network exposure function entity, a network exposure function network element, a network capability exposure function entity, a network capability exposure function device, a network capability exposure function network element, a network capability exposure device, or the like. In a future communication system, for example, in 6G, the second network element may still be the NEF, or may have another name. This is not limited in this application.

In a possible implementation, when the third-party application is a trusted function or a function deployed by the operator, the second network element may not be used. That is, the third-party application can directly communicate with the first network element.

### 5. Service requester

The service requester (or referred to as an operation requester or a third party) may be understood as a device that sends the operation message. For example, the service requester may be a server (server), a P-IoT server, an AF, an AS, an ambient internet of things application function (A-IoT AF or P-IoT AF), or another device that sends the operation message. The service requester may correspond to a specific type of user. This type of user may include an enterprise, a tenant, a third party, or a company. This is not limited. That the service requester corresponds to a specific type of user may be understood as that the service requester belongs to this type of user and is managed by this type of user.

The operation message indicates to perform at least one of the following operations on the terminal: an inventory operation, a read operation, a write operation, an invalidation operation, a message interaction operation with a tag, or the like.

### 6. Third network element

The third network element is used for management of subscription data or the like of the terminal.

For example, the third network element may be a unified data management function, which may be referred to as a unified data management device, a unified data management network element, a data management device, a unified data management entity, a UDM, or the like. In a 5G communication system, the third network element may be a UDM. In a future communication system, the third network element may still be the UDM, or may have another name. This is not limited in embodiments of this application. The third network element may be a core network device. The third network element may be a control plane device.

For another example, the third network element may be a user data storage function, which may be referred to as a user data repository device, a user data repository entity, a user data repository network element, a user data storage device, a UDR, or the like. The user data repository mainly includes the following functions: storage and retrieval of subscription data, policy data, application data, and other types of data. In a 5G communication system, the third network element may be a UDR. In a future communication system, the third network element may still be the UDR, or may have another name. This is not limited in embodiments of this application.

### 7. Fourth network element

The fourth network element is responsible for user authentication, to determine whether the terminal device is trusted and authentic, or to determine whether the user or the device is allowed to access the network. The fourth network element may be an authentication service function, which may be referred to as an authentication service network element, an authentication service device, an AUSF, or the like, and is used for authentication, that is, authentication between the terminal and the operator network. After receiving an authentication request initiated by a subscriber, the fourth network element may perform authentication and/or authorization on the subscriber using authentication information and/or authorization information stored in the third network element, or generate authentication and/or authorization information for the subscriber through the third network element. The fourth network element may feed back the authentication information and/or authorization information to the subscriber. In a 5G communication system, the fourth network element may be an AUSF. In a future communication system, the fourth network element may still be the AUSF, or may have another name. This is not limited in embodiments of this application.

It should be understood that the foregoing names are merely used to distinguish between different functions, and do not indicate that these network elements are independent physical devices. The specific form of the network elements is not limited in this application. For example, the foregoing network elements may be integrated into a same physical device, or may be independent physical devices. For example, the first network element may be integrated with the second network element. When two network elements are integrated, interaction between the two network elements provided in embodiments of this application may be understood as an internal operation of the integrated network element or may be omitted.

It should be noted that the system architecture shown in FIG. 1 or FIG. 3 is merely an example, and is not to be considered as a specific limitation on the technical solutions of this application.

For a better understanding of content of the solutions, some terms in embodiments of this application are further explained and described below, to facilitate understanding by a person skilled in the art. This part is merely for ease of understanding, and is not to be considered as a specific limitation on this application.

In this application, the reader may establish a connection to the reader; in other words, the reader triggers the terminal to perform random access or the like. This application does not limit the description thereof, and other descriptions representing that the reader establishes a connection to the terminal are also applicable to this solution. An example in which the reader establishes a connection to the terminal is used below for description, which should not be considered as a specific limitation on this application.

It is to be understood that, in this application, the reader may establish a connection to different types of terminals. For ease of description, in this application, the terminal may be classified into a first type and a second type. The first type is different from the second type.

For example, the first type of terminal may be a terminal that does not support active communication. For example, this type of terminal does not support carrier generation (or referred to as carrier recovery), or uplink data transmission of this type of terminal is achieved by reflecting an externally provided carrier. For example, an entity may provide a carrier, and this type of terminal sends uplink data by reflecting the carrier provided by the entity. In this case, the first type of terminal includes at least one of a passive terminal, a semi-passive terminal, a semi-active terminal, or the like. The second type of terminal may be a terminal that supports active communication. For example, this type of terminal supports carrier generation (or referred to as carrier recovery); or uplink data transmission of this type of terminal may be actively initiated by the terminal, without relying on an externally provided carrier or without relying on reflecting an externally provided carrier. In this case, the second type of terminal includes at least one of an active terminal, a semi-passive terminal, a semi-active terminal, or the like. It is also true the other way around.

In this application, the first type of terminal is different from the second type of terminal. For example, when the first type of terminal includes a passive terminal, a semi-passive terminal, and a semi-active terminal, the second type of terminal includes an active terminal. Alternatively, when the first type of terminal includes an active terminal, the second type of terminal includes a passive terminal, a semi-passive terminal, and a semi-active terminal. In this application, an example in which the first type of terminal includes a passive terminal, a semi-passive terminal, and a semi-active terminal, and the second type of terminal includes an active terminal is used below for description. This should not be considered as a specific limitation on this application.

It should be noted that the above are merely some specific examples of the first type of terminal and the second type of terminal. This application does not limit which particular terminals the first type of terminal and the second type of terminal are.

A process of establishing a connection between a reader and each of a first type of terminal and a second type of terminal is described below by way of example.

In a first case, for the first type of terminal, the process of establishing a connection between the reader and the terminal may include, but is not limited to, the following steps.

Step 1: The reader sends a select (select) command. The select command may include mask information.

In this application, the mask information may indicate a memory area and/or a mask (mask). The memory area may include a reserved (RESERVED) area, an electronic product code area, a tag identification number (TID) area, and a user (USER) area. The mask may be used to represent a terminal identifier range, to facilitate selection of one or more terminals. For example, in this application, the mask may include at least one of a network identifier, a group identifier (group ID), terminal type information, or a terminal identifier.

The network identifier mentioned in this application may be an identifier of a public land mobile (communication) network (public land mobile network, PLMN), an identifier of a public network, an identifier of a non-public network, an identifier of a local area network, or an identifier of a wide area network. The non-public network may include a standalone non-public network (standalone non-public network, SNPN), a public network integrated non-public network (public network integrated non-public network, PNI-NPN), and/or the like.

The terminal type information mentioned in this application may include a first type and/or a second type.

The terminal identifier range mentioned in this application may be referred to as a terminal identifier list, which may include an identifier of at least one terminal. Alternatively, the terminal identifier range is represented by a prefix of the identifier of the terminal. Alternatively, the terminal identifier range is represented by the group identifier. These are merely examples of the terminal identifier range, and this application is not limited thereto. Any content that can indicate the terminal identifier range may be used as the terminal identifier range in this application.

Optionally, the mask information may indicate start address information of the memory area, a mask length, and/or the like. This is not limited in this application.

Step 2: After detecting the select command, the terminal determines whether identifier information stored matches a mask indicated by the mask information, or determines whether information stored in the memory area indicated by the mask information matches a mask indicated by the mask information. If they match, the terminal may generate a random number, and feed back information based on the random number when subsequently detecting a query (Query or QueryRep) command. For example, each time the terminal detects a query command, it decrements the random value by one until the random value is decremented to 0, and the terminal sends a random number (RN16, that is, a 16-bit random number) to the reader. If they do not match, the terminal does not perform any action.

Step 3: The reader sends an acknowledgment (ACK) command to the terminal, where the acknowledgment command includes the random number (RN16).

Step 4: When the terminal verifies that the random number in the acknowledgment command is correct, the terminal sends an identifier of the terminal to the reader.

For example, the terminal sends an RRC message to the reader. The RRC message may include the identifier of the terminal. For example, the RRC message may include a non-access stratum (Non-Access Stratum, NAS) message, where the NAS message includes the identifier of the terminal. The RRC message may be an RRC setup complete message or the like. The NAS message may be a registration request (registration request) message, an access request message, an uplink NAS message, or the like. The registration request message in this application is used to request registration or request access to the network. Optionally, the registration request message may be merely a message name, and it does not indicate that the terminal needs to perform a complete registration procedure. For example, the terminal may send the identifier information through the registration request message.

In a second case, for the second type of terminal, the process of establishing a connection between the reader and the terminal may include, but is not limited to, the following steps.

Step 1: The terminal sends a random access request (random access request) message to the reader, for requesting access to the reader.

Optionally, the random access request message may include a random access preamble (random access preamble). The random access preamble may also be referred to as a preamble.

Optionally, after obtaining the preamble, the network device may estimate a transmission delay between the network device and the terminal device based on the preamble, so that the network device calibrates an uplink timing advance (uplink timing, TA).

Step 2: The reader sends a random access response (random access response) message to the terminal.

Optionally, the random access response message may include the uplink timing advance, identifier information of the preamble, and the like. The identifier information of the preamble may be, for example, a number of the preamble or an index of the preamble.

When a preamble indicated by the identifier information of the preamble in the random access response message is the same as the preamble sent by the terminal to the reader, the terminal considers that the random access request message is successfully received by the network device, and the random access response message is in response to the random access request message. When the preamble indicated by the identifier information of the preamble in the random access response message is different from the preamble sent by the terminal to the reader, the terminal considers that the random access request message is not successfully received by the network device, and the terminal may re-trigger the random access procedure.

Step 3: The terminal sends a radio resource control setup request (RRC setup request) message to the reader, to request establishment of a radio resource control (radio resource control, RRC) connection to the reader.

Step 4: The reader sends an RRC setup (RRC setup) message to the terminal, to indicate that the terminal is allowed to access the reader.

Step 5: After completing establishment of a signaling radio bearer (signalling radio bearer, SRB) resource, the terminal sends an RRC setup complete (RRC setup complete) message to the reader, to indicate that the connection between the terminal and the reader is successfully established.

For example, the RRC setup complete message may include the identifier of the terminal. For example, the RRC message may include a non-access stratum (Non-Access Stratum, NAS) message, where the NAS message includes the identifier of the terminal. The NAS message may be a registration request message, an access request message, an uplink NAS message, or the like.

A registration procedure of the terminal is described below in detail, which may specifically include, but is not limited to, the following steps.

Step 1: The terminal sends the registration request message to the reader, where the registration request message includes the identifier of the terminal.

Optionally, the registration request message further includes a registration type (registration type).

The registration type includes at least one of the following:
Initial registration (initial registration): a registration procedure initiated by the terminal in a deregistered state.

Mobility registration update (mobility registration update): a registration procedure that needs to be initiated by the terminal due to movement.

Periodic registration update (periodic registration update): a registration procedure initiated by the terminal in a registered state due to the expiry of a periodic registration update timer.

Emergency registration (emergency registration): a registration procedure initiated by the terminal in a service-restricted state.

When the terminal has a valid 5G-GUTI (a temporary identity, assigned by a first network element serving the terminal), the registration request message includes the 5G-GUTI (that is, the identifier of the terminal is the 5G-GUTI). When the terminal has no valid 5G-GUTI, the registration request message includes an SUCI (that is, the identifier of the terminal is the SUCI). In emergency registration, when the terminal has no valid 5G-GUTI and no SUPI (that is, no SUCI, where the SUCI is an encrypted SUPI), the registration request message includes a PEI (that is, the identifier of the terminal is the PEI).

The first network element may be an AMF, a TMF, an AIoTMF, or the like. An example in which the first network element is an AMF is used below for description.

Step 2: The reader selects a suitable AMF, and sends the registration request message to the AMF. For example, the AMF serving the terminal is selected based on a location of the terminal.

Step 3: The AMF selects a suitable AUSF to perform a security procedure such as authentication. The terminal, the AMF, the AUSF, and the UDM interact with each other to complete the security procedure such as authentication.

Step 4: After mutual authentication between the terminal and the network side succeeds, the AMF sends an N2 message to the reader, where the N2 message includes a registration accept (registration response) message.

Step 5: The reader sends the registration accept message to the terminal.

The registration accept message indicates that the terminal has successfully registered with the network.

Embodiments of this application are described below in detail. Specifically, the terminal in the following may be the terminal in FIG. 1 to FIG. 3, and the reader (such as a first reader or a second reader), the first network element, the second network element, the service requester, the third network element, and the fourth network element in the following may be respectively the reader, the first network element, the second network element, the third network element, and the fourth network element as described above. For ease of description, an example in which the first network element, the second network element, the third network element, and the fourth network element are respectively an AMF, an NEF, a UDM, and an AUSF is used below for description.

It should be noted that names of messages between network elements, names of parameters in the messages, or the like in the following embodiments are merely examples, and there may be other names in a specific implementation. This is not specifically limited in embodiments of this application. Processing performed by a single execution entity (the terminal, the reader (such as the first reader or the second reader), the AMF, the NEF, the service requester, the UDM, or the AUSF) shown in embodiments of this application may also be divided for execution by multiple execution entities, and these execution entities may be logically and/or physically separated. For example, processing performed by the reader may be divided for execution by at least one of a CU, a DU, and an RU.

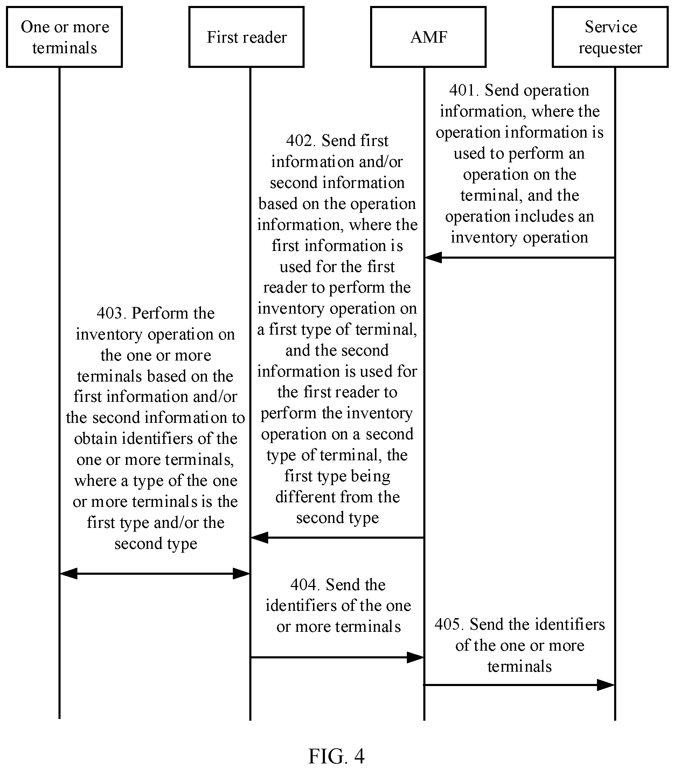

FIG. 4 shows a communication method according to an embodiment of this application. The method includes, but is not limited to, the following steps.

401. The service requester sends operation information to the AMF, where the operation information is used to perform an operation on the terminal, and the operation includes an inventory operation.

Correspondingly, the AMF receives the operation information from the service requester. Optionally, the AMF may obtain the operation information from the service requester through the NEF. For example, the AMF may receive the operation information forwarded by the NEF. For another example, the NEF may obtain the operation information based on a message from the service requester, and send the operation information to the AMF.

Optionally, the message from the service requester mentioned herein may include at least one of an operation type, first indication information, location information corresponding to a terminal to be operated, an identifier of the terminal to be operated, mask information, identifier information indicating the service requester, or group identifier information.

The operation type may include an inventory operation, a read operation, a write operation, a deactivation operation, a positioning operation, or an information interaction operation with a terminal.

The first indication information may indicate a type of the terminal to be operated. For example, the first indication information may be at least one piece of information. Specifically:
A. The first indication information includes information indicating a passive terminal, for example, the passive terminal, or may include a character string, a bit, a numerical value, or the like indicating the passive terminal. Alternatively, the first indication information includes information about a semi-active terminal, for example, the semi-active terminal, or may include a character string, a bit, a numerical value, or the like indicating the semi-active terminal. Alternatively, the first indication information includes information about a semi-passive terminal, for example, the semi-passive terminal, or may include a character string, a bit, a numerical value, or the like indicating the semi-passive terminal. In this way, it can indicate that the terminal to be operated includes a first type of terminal, and/or indicate that the inventory operation is to be performed on the first type of terminal.
B. The first indication information may include information indicating an active terminal, for example, the active terminal, or may include a character string, a bit, a numerical value, or the like indicating the active terminal, to indicate that the terminal to be operated includes a second type of terminal, and/or to indicate that the inventory operation is to be performed on the second type of terminal.
C. The first indication information may include the information indicating a passive terminal and the information indicating an active terminal. For this, refer to the foregoing manners A and B, and details are not described herein again.

For another example, the first indication information may be P bits, and the P bits correspond to 2^{P} states, where the states may indicate the type of the terminal to be operated. For example, P is 2, corresponding to four states '00', '01', '10', and '11'. '00' indicates that the terminal to be operated includes the first type of terminal, and/or indicates that the inventory operation is to be performed on the first type of terminal. '01' indicates that the terminal to be operated includes the second type of terminal, and/or indicates that the inventory operation is to be performed on the second type of terminal. '10' indicates that the terminal to be operated includes the first type of terminal and the second type of terminal, and/or indicates that the inventory operation is to be performed on the first type of terminal and the second type of terminal. These are merely examples, and other combinations may also be possible, which are not listed one by one herein. P may be a positive integer.

The location information mentioned in this application includes, for example, at least one of longitude and latitude, interval values composed of longitude and latitude, coordinate values, interval values composed of coordinate values, a cell identifier, a reader identifier, a tracking area (tracking area, TA) identifier, a closed access group identifier (closed access group ID, CAG ID), a network identifier, or the like. The cell identifier may be a physical cell identifier (physical cell identifier, PCI), a logical cell identifier, a cell global identifier (cell global identity, CGI), or the like. The tracking area identifier may be a tracking area identity (tracking area identity, TAI) or a tracking area code (tracking area code, TAC). Optionally, the location information corresponding to the terminal to be operated may be understood as location information of the inventory operation and/or an inventory service to be performed on the terminal to be operated.

Optionally, that inventory operation information includes the identifier of the terminal to be operated may be understood as that the inventory operation information includes an identifier range of the terminal to be operated. The identifier range of the terminal to be operated includes the identifier of the terminal to be operated. Alternatively, the identifier range of the terminal to be operated is represented by a prefix of the identifier of the terminal to be operated. Alternatively, the identifier range of the terminal to be operated is represented by a group identifier. These are merely some examples, and this application is not limited thereto. Any information that can indicate the identifier of the terminal to be operated may be used as the identifier of the terminal to be operated in this application.

The identifier information indicating the service requester mentioned in this application may include globally unique identifier information of the service requester, globally unique identifier information of an operator, or the like. For example, if the service requester is the AF, the identifier information indicating the service requester may include an AF identifier (for example, AF ID, AF Identifier, or AF identity) or an AF address. Alternatively, the identifier information indicating the service requester may be a service identifier corresponding to the service requester, for example, a service identifier (for example, service Identifier, service ID, or service identity) or an application identifier (for example, APP ID, APP Identifier, or APP identity). Alternatively, the identifier information indicating the service requester may include a user identifier (user ID), an enterprise identifier (enterprise ID), a third party identifier (the third party ID), an owner identifier (owner ID), or the like. These are merely examples of the identifier information indicating the service requester. The specific name, construction, and length of the identifier information indicating the service requester are not limited in this application. Any information that can indicate the service requester may be used as the identifier information indicating the service requester in this application. Optionally, the AF address may include at least one of an internet protocol (internet protocol, IP) address, a port number, a domain name, or the like.

The group identifier information mentioned in this application may include at least one of a network identifier, a group identifier, terminal type information, or a terminal identifier.

In a possible implementation, it may be considered that information included in the message from the service requester is in the operation information. That is, it may be described as that the message from the service requester includes the operation information, where the operation information may include at least one of the operation type, the first indication information, the location information corresponding to the terminal to be operated, the identifier of the terminal to be operated, the mask information, the identifier information indicating the service requester, or the group identifier information. Alternatively, the operation information may be obtained from the information included in the message from the service requester. For example, the operation information may be a parameter in the message from the service requester; or part of the operation information is included in a message name of the message from the service requester. For example, different operation types may be indicated/represented by different message names. A message, field, encoding, construction method, or the like that carries the operation information is not limited in this application. The operation information may be from a same message or different messages. This is not limited in this application.

402. The AMF sends first information and/or second information to the first reader based on the operation information, where the first information is used for the first reader to perform the inventory operation on the first type of terminal, and the second information is used for the first reader to perform the inventory operation on the second type of terminal, the first type being different from the second type.

Correspondingly, the first reader receives the first information and/or the second information from the AMF.

403. The first reader performs the inventory operation on one or more terminals based on the first information and/or the second information to obtain identifiers of the one or more terminals, where the type of the one or more terminals is the first type and/or the second type.

It is to be understood that, the first reader may perform the inventory operation on the first type of terminal based on the first information, or may perform the inventory operation on the second type of terminal based on the second information. That is, in the case where the first reader receives the first information from the AMF, the first reader performs the inventory operation on the first type of terminal based on the first information. In this case, the one or more terminals in step 403 are the first type of terminal. In the case where the first reader receives the second information from the AMF, the first reader performs the inventory operation on the second type of terminal based on the second information. In this case, the one or more terminals in step 403 are the second type of terminal. In the case where the first reader receives the first information and the second information from the AMF, the first reader performs the inventory operation on the first type of terminal based on the first information, and performs the inventory operation on the second type of terminal based on the second information. In this case, the one or more terminals in step 403 include the first type of terminal and the second type of terminal.

For the process of establishing a connection to a terminal when the first reader performs the inventory operation on different types of terminals, refer to the foregoing related content, and details are not described herein again.

404. The first reader sends the identifiers of the one or more terminals to the AMF.

Correspondingly, the AMF receives the identifiers of the one or more terminals from the first reader. Optionally, the identifiers of the one or more terminals may be carried in an N2 message. The N2 message mentioned in this application may also be referred to as a next generation application protocol (next generation application protocol, NGAP) message, and the name thereof is not limited in this application.

405. The AMF sends the identifiers of one or more terminals to the service requester.

Correspondingly, the service requester receives the identifiers of the one or more terminals from the AMF. For example, the AMF may send the identifiers of the one or more terminals to the service requester through the NEF.

Specific implementations of step 401 to step 405 are described below.

In a possible implementation, the operation information may be used to perform the inventory operation on the terminal. For example, the operation information is the inventory operation information. For example, the operation information includes the operation type, and the operation type includes the inventory operation. In another possible implementation, the operation information may include performing the inventory operation on the terminal. For example, the operation information is read operation information, write operation information, positioning operation information, deactivation operation information, or information about the information interaction operation with the terminal. In this case, for example, it may be considered that the operation information includes the operation type, and the operation type includes the read operation, the write operation, the deactivation operation, the positioning operation, the information interaction operation with the terminal, or the like. Before performing the read operation, the write operation, the positioning operation, the deactivation operation, or the information interaction operation with the terminal, the network needs to first perform the inventory operation on the terminal; and after obtaining an identifier of a (specific) terminal, or after a (specific) terminal sends an identifier, the network performs the preceding operation on the (specific) terminal. For ease of understanding, an example in which the operation information is the read operation information is used below for illustration. Specifically, the operation information indicates to perform the read operation on the terminal. After receiving the operation information, the AMF may first perform the inventory operation on the terminal, and then perform the read operation on the terminal subsequent to a successful inventory. In examples hereinafter, an example in which the operation information is the inventory operation information is used for description, which should not be considered as a specific limitation on this application.

Optionally, the inventory operation information may be carried in a first message. It should be understood that, in this application, a message name of the first message may or may not indicate the type of the terminal to be operated. It should be noted that, except where the message name of the first message is particularly described below as indicating the type of the terminal to be operated, the message name of the first message may be understood as indicating or not indicating the type of the terminal to be operated.

When the message name of the first message indicates the type of the terminal to be operated, the first message may be referred to as an ambient internet of things passive service request (for example, Nnef_ A-IoT _ Passive _Service Request) message, indicating that the terminal to be operated is the first type of terminal, and/or indicating to perform the inventory operation on the first type of terminal. Alternatively, the first message may be referred to as an ambient internet of things active service request (for example, Nnef_ A-IoT _Active_Service Request) message, indicating that the terminal to be operated is the second type of terminal, and/or indicating to perform the inventory operation on the second type of terminal. Alternatively, the first message may be referred to as an ambient internet of things service request (for example, Nnef_AIoT_Service Request) message, indicating that the terminal to be operated includes the first type of terminal and the second type of terminal, and/or indicating to perform the inventory operation on the first type of terminal and the second type of terminal. It should be understood that, these are some examples of the first message, and other implementations may also be possible, which are not listed one by one herein.

Optionally, the Nnef_ A-IoT _ Passive _Service Request message and the Nnef_ A-IoT _Active_Service Request message may be respectively simplified as a passive service request (for example, Nnef_ Passive _Service Request) message and an active service request (for example, Nnef_Active_Service Request) message.

When the message name of the first message does not indicate the type of the terminal to be operated, the first message may be referred to as an ambient internet of things service request (for example, Nnef_AIoT_Service Request) message, indicating to perform the inventory operation on the terminal to be operated.

Sending, by the AMF, the first information and/or the second information to the first reader is described below in detail with reference to the inventory operation information. Specifically:

In a first case, the AMF determines, based on the inventory operation information, the type of the terminal to be operated, and sends the first information and/or the second information to the first reader based on the type of the terminal to be operated.

Determining, by the AMF based on the inventory operation information, the type of the terminal to be operated may specifically have the following implementations.
1. The inventory operation information is carried in the first message, the message name of which indicates the type of the terminal to be operated.
2. The inventory operation information includes the first indication information that indicates the type of the terminal to be operated. For the first indication information, refer to the foregoing related description, and details are not described herein again.
3. The inventory operation information includes the location information corresponding to the terminal to be operated, and the AMF may determine, based on the location information corresponding to the terminal to be operated, the type of the terminal to be operated. Several possible implementations of "determining, by the AMF based on the location information corresponding to the terminal to be operated, the type of the terminal to be operated" are provided below by way of example. Specifically:
   ① The location information corresponding to the terminal to be operated corresponds to the type of the terminal to be operated, and the AMF may determine, based on the location information corresponding to the terminal to be operated, the type of the terminal to be operated.

In a possible implementation, that the location information corresponding to the terminal to be operated corresponds to the type of the terminal to be operated may be understood as that an area indicated by the location information corresponding to the terminal to be operated corresponds to the type of the terminal to be operated. That is, which locations specifically correspond to which types of terminals may be predefined. For example, the location information corresponding to the terminal to be operated corresponds to the first type and/or the second type. In this case, the AMF may determine, based on the area indicated by the location information corresponding to the terminal to be operated, the type of the terminal to be operated.

In another possible implementation, that the location information corresponding to the terminal to be operated corresponds to the type of the terminal to be operated may be understood as that the location information corresponding to the terminal to be operated corresponds to an operating mode of the terminal to be operated, where the operating mode of the terminal to be operated corresponds to the first type and/or the second type.

In this application, a terminal that operates in a passive mode needs to send data by reflecting a carrier. In this case, it may be considered that the terminal that operates in the passive mode corresponds to the first type of terminal. For example, the terminal that operates in the passive mode may be considered as the first type of terminal. A terminal that operates in an active mode is capable of generating a carrier (or recovering a carrier) independently to send data. In this case, it may be considered that the terminal that operates in the active mode corresponds to the second type of terminal. For example, the terminal that operates in the active mode may be considered as the second type of terminal. In this case, which locations specifically correspond to which types of terminals may be predefined. For example, the location information corresponding to the terminal to be operated corresponds to the first type and/or the second type. Alternatively, which locations specifically correspond to which operating modes is predefined, and the location information corresponding to the terminal to be operated corresponds to the operating mode of the terminal to be operated. The two statements may be interchangeable.

For example, the operating mode of all terminals to be operated corresponds to the first type. For example, the operating mode of all terminals to be operated is the passive mode, and the terminals to be operated may be considered as the first type of terminal.

For another example, the operating mode of all terminals to be operated corresponds to the second type. For example, the operating mode of all terminals to be operated is the active mode, and the terminals to be operated may be considered as the second type of terminal.

For another example, the operating mode of a portion of the terminals to be operated corresponds to the first type, and the operating mode of another portion of the terminals to be operated corresponds to the second type. For example, the operating mode of the terminals to be operated includes the passive mode and the active mode, and the terminals to be operated may be considered as the first type of terminal and the second type of terminal.

Optionally, in this application, the passive mode and the active mode may also be referred to as a passive-powered mode and an active-powered mode, respectively. The names of the passive mode and the active mode are not limited in this application. The passive mode and the active mode are used as examples below for description, which should not be considered as a specific limitation on this application. Optionally, in this application, the operating mode may be interchangeable with a mode, an excitation mode, an activation mode, a communication mode, or the like. The name of the operating mode is not limited in this application.

Optionally, the type of terminal corresponding to different location information may be the same or different. For example, the types of terminals in areas indicated by different location information may be the same or different. Optionally, the location information herein may be a location of at least one network, where the network may be a public network, a non-public network, a local area network, a wide area network, or the like. For example, the location information corresponding to the terminal to be operated is locations of the local area network and/or the non-public network, and the type of the terminal to be operated includes the first type. Additionally/alternatively, the location information corresponding to the terminal to be operated is locations of the wide area network and/or the public network, and the type of the terminal to be operated includes the second type.

Optionally, when implementation ① of implementation 3 is used, if a new terminal moves to the area indicated by the location information before the AMF sends the first information and/or the second information to the first reader based on the type of the terminal to be operated, but the AMF still determines, based on the location information corresponding to the terminal to be operated, the type of the terminal to be operated, and sends the first information and/or the second information to the first reader based on the type of the terminal to be operated, the new terminals may be missed. To avoid this, several cases are described below in detail. Specifically:
(1) The operating mode associated with the location information corresponding to the terminal to be operated is the passive mode. An active terminal moves from an area corresponding to the active mode to the area indicated by the location information corresponding to the terminal to be operated. In this case, the active terminal may trigger a registration procedure (for example, a mobility registration update procedure) or a tracking area update (for example, tracking area update, TAU) procedure, so that the AMF re-determines location information corresponding to the active terminal, determines an operating mode of the active terminal, and indicates the operating mode of the active terminal to the active terminal. In this way, it is ensured that the operating mode of the terminal within the area indicated by the location information corresponding to the terminal to be operated is the passive mode, so that the AMF can inventory all terminals within the area. Likewise, the operating mode associated with the location information corresponding to the terminal to be operated is the active mode. An active terminal moves from an area corresponding to the passive mode to the area indicated by the location information corresponding to the terminal to be operated. In this case, the active terminal may trigger a registration procedure (for example, a mobility registration update procedure) or a tracking area update procedure, so that the AMF re-determines location information corresponding to the active terminal, determines an operating mode of the active terminal, and indicates the operating mode of the active terminal to the active terminal. In this way, it is ensured that the operating mode of the terminal within the area indicated by the location information corresponding to the terminal to be operated is the passive mode, so that the AMF can inventory all terminals within the area.
(2) The operating mode associated with the location information corresponding to the terminal to be operated is the passive mode or the active mode. A passive terminal enters the area indicated by the location information corresponding to the terminal to be operated. In this case, the AMF may further determine the type of the terminal to be operated with reference to the following implementation 3. In this case, it may be considered that the inventory operation information includes the location information corresponding to the terminal to be operated and the identifier of the terminal to be operated. Alternatively, the AMF may directly determine, based on the following implementation 3, the type of the terminal to be operated. In this case, it may be considered that the inventory operation information includes the identifier of the terminal to be operated.
   ② The location information corresponding to the terminal to be operated corresponds to a network in which the terminal to be operated is located, where the network in which the terminal to be operated is located corresponds to the type of the terminal to be operated. That is, the AMF may determine, based on the location information corresponding to the terminal to be operated, the network in which the terminal to be operated is located, to determine, based on the network in which the terminal to be operated is located, the type of the terminal to be operated. For example, the network in which the terminal to be operated is located includes a local area network and/or a non-public network, and the type of the terminal to be operated includes the first type. Additionally/alternatively, the network in which the terminal to be operated is located includes a wide area network and/or a public network, and the type of the terminal to be operated includes the second type.

Optionally, that the location information corresponding to the terminal to be operated corresponds to the network in which the terminal to be operated is located may be understood as that an area indicated by the location information corresponding to the terminal to be operated corresponds to the network in which the terminal to be operated is located. Therefore, the AMF may determine, based on the area indicated by the location information corresponding to the terminal to be operated, the network in which the terminal to be operated is located.

Implementation ② of implementation 3 is similar to implementation ① of implementation 3 in that both predefine which locations specifically correspond to which types of terminals. However, in actual application scenarios, if a new terminal moves to these areas before the AMF sends the first information and/or the second information to the first reader based on the type of the terminal to be operated, the new terminal may be missed when the AMF determines, based on the location information corresponding to the terminal to be operated, the type of the terminal to be operated, and sends the first information and/or the second information to the first reader based on the type of the terminal to be operated. For example, the network in which the terminal to be operated is located is a local area network, and an active terminal moves to the local area network. According to the previous agreement, the AMF may consider that the type of the terminal to be operated is the first type, and sends the first information to the first reader. However, actually, the local area network also includes the active terminal, that is, the second type of terminal, but the AMF may not send the second information to the first reader based on the location information. Therefore, the second type of terminal may be missed. To avoid this, the AMF may further determine the type of the terminal to be operated with reference to the foregoing implementation 3. In this case, it may be considered that the inventory operation information includes the location information corresponding to the terminal to be operated and the identifier of the terminal to be operated. Alternatively, the AMF may directly determine, based on the foregoing implementation 3, the type of the terminal to be operated. In this case, it may be considered that the inventory operation information includes the identifier of the terminal to be operated.

4. The inventory operation information includes the identifier of the terminal to be operated, and the AMF determines, based on the identifier of the terminal to be operated, the type of the terminal to be operated. For the identifier of the terminal to be operated, refer to the foregoing related description, and details are not described herein again.

Determining, by the AMF based on the identifier of the terminal to be operated, the type of the terminal to be operated may specifically have the following several implementations.
① The first type of terminal and the second type of terminal correspond to different terminal identifier ranges, respectively. For ease of understanding, in this application, the terminal identifier range corresponding to the first type of terminal is denoted as a first identifier range, and the terminal identifier range corresponding to the second type of terminal is denoted as a second identifier range. It is to be understood that, when the identifier range of the terminal to be operated falls within the first identifier range, the terminal to be operated is the first type of terminal. When the identifier range of the terminal to be operated falls within the second identifier range, the terminal to be operated is the second type of terminal.
② A value of an n^{th} field in the identifier of the terminal to be operated indicates the type of the terminal to be operated. For example, if the value of the n^{th} field is 0, it indicates that the terminal to be operated is the first type of terminal; and if the value of the n^{th} field is 1, it indicates that the terminal to be operated is the second type of terminal. It is also true the other way around. For example, an identifier of a terminal is AAABBB034333, in which a value of a seventh field is 0, indicating that the terminal is the first type of terminal.

n is an integer greater than or equal to 1.

③ The AMF obtains, based on the identifier of the terminal to be operated, subscription data corresponding to the terminal to be operated, where the subscription data includes the type of the terminal to be operated.

For example, the AMF may obtain subscription data corresponding to the first type of terminal based on an identifier of the first type of terminal, where the subscription data may include the first type. For example, the first type of terminal is a passive terminal, and the subscription data may include information about the passive terminal, for example, the passive terminal, or may include a character string, a bit, a numerical value, or the like indicating the passive terminal. In this way, it may be considered that the subscription data may include the first type. Alternatively, the first type of terminal is a semi-passive terminal, and the subscription data may include information about the semi-passive terminal, for example, the semi-passive terminal, or may include a character string, a bit, a numerical value, or the like indicating the semi-passive terminal. In this way, it may be considered that the subscription data may include the first type. Alternatively, the first type of terminal is a semi-active terminal, and the subscription data may include information about the semi-active terminal, for example, the semi-active terminal, or may include a character string, a bit, a numerical value, or the like indicating the semi-active terminal. In this way, it may be considered that the subscription data may include the first type.

For another example, the AMF may obtain subscription data corresponding to the second type of terminal based on an identifier of the second type of terminal, where the subscription data may include the second type. For example, the second type of terminal is an active terminal, and the subscription data may include information about the active terminal, for example, the active terminal, or may include a character string, a bit, a numerical value, or the like indicating the active terminal. In this way, it may be considered that the subscription data may include the second type.

For another example, the AMF may obtain subscription data corresponding to the first type of terminal and the second type of terminal based on the identifier of the first type of terminal and the identifier of the second type of terminal. The subscription data may include the first type and the second type. For this, refer to the foregoing description, and details are not described herein again.

Optionally, the AMF may obtain the subscription data corresponding to the terminal to be operated from the UDM based on the identifier of the terminal to be operated. Optionally, the subscription data may also be referred to as service configuration data, and the name thereof is not limited in this application.

Optionally, there may be one or more pieces of subscription data. For example, all of the terminals to be operated correspond to one piece of subscription data. Alternatively, one of the terminals to be operated corresponds to one piece of subscription data, and another terminal corresponds to another piece of subscription data. Alternatively, the first type of terminal among the terminals to be operated corresponds to one piece of subscription data, and the second type of terminal corresponds to another piece of subscription data. These are some examples, and other implementations may also be possible, which are not listed one by one herein.

④ The AMF may obtain, based on the identifier of the terminal to be operated, first context information corresponding to the identifier of the terminal to be operated, where the first context information includes an association relationship between the identifier of the terminal to be operated and the type of the terminal to be operated.

In a possible implementation, this implementation may be applicable to the second type of terminal. For the first type of terminal, the AMF may determine the type of the terminal by using any one or more of the implementations ① to ③ of implementation 4.

In another possible implementation, this implementation may be applicable to the first type of terminal and the second type of terminal. For example, after performing the inventory operation on the first type of terminal, the AMF may record, in context information corresponding to the first type of terminal, identifier information of the first type of terminal and terminal type information, where the terminal type information is the first type; and/or after performing the inventory operation on the second type of terminal, the AMF may record, in context information corresponding to the second type of terminal, identifier information of the second type of terminal and terminal type information. In other words, after performing the inventory operation on the terminal, the AMF may record the identifier information of the terminal and the terminal type information in the corresponding context information.

⑤ The AMF may obtain, based on the identifier of the terminal to be operated, second context information corresponding to the identifier of the terminal to be operated, where the second context information includes an association relationship between the identifier of the terminal to be operated and the operating mode of the terminal to be operated, and the operating mode of the terminal to be operated corresponds to the first type and/or the second type.

For example, the operating mode of all terminals to be operated corresponds to the first type. For example, the operating mode of all terminals to be operated is the passive mode, and the terminals to be operated may be considered as the first type of terminal. In this case, it may be considered that implementation ④ and implementation ⑤ of implementation 4 are the same.

For another example, the operating mode of all terminals to be operated corresponds to the second type. For example, the operating mode of all terminals to be operated is the active mode, and the terminals to be operated may be considered as the second type of terminal. In this case, it may be considered that implementation ④ and implementation ⑤ of implementation 4 are the same.

For another example, the operating mode of a portion of the terminals to be operated corresponds to the first type, and the operating mode of another portion of the terminals to be operated corresponds to the second type. For example, the operating mode of the terminals to be operated includes the passive mode and the active mode, and the terminals to be operated may be considered as the first type of terminal and the second type of terminal. In this case, it may be considered that implementation ④ and implementation ⑤ of implementation 4 are the same.

5. The inventory operation information includes the identifier information indicating the service requester, and the AMF may determine, based on the identifier information indicating the service requester, the type of the terminal to be operated. For example, the AMF may obtain subscription data corresponding to the service requester based on the identifier information indicating the service requester, where the subscription data may include the type of the terminal to be operated. Optionally, the AMF may obtain the subscription data from the UDM based on the identifier information indicating the service requester.

For the identifier information indicating the service requester, refer to the foregoing related description, and details are not described herein again.

For example, assuming that the service requester is an AF, the identifier information indicating the service requester may include an identifier of the AF and/or an address of the AF, and the AMF determines, based on the identifier of the AF and/or the address of the AF, the type of the terminal to be operated. For example, the AMF may obtain subscription data corresponding to the AF based on the identifier of the AF and/or the address of the AF, where the subscription data includes the type of the terminal to be operated. Optionally, the AMF may obtain the subscription data corresponding to the AF from the UDM based on the identifier of the AF and/or the address of the AF.

It should be noted that any one of the above-described implementations 1 to 5 may be separately used as an implementation of determining, by the AMF, the type of the terminal to be operated. Alternatively, a combination of at least two of the above-described implementations 1 to 5 may be used as an implementation of determining, by the AMF, the type of the terminal to be operated. A specific combination is not limited in this application. It is to be understood that the above are merely several simple examples, and there are other implementations. This is not limited in this application.

In a second case, it is predefined or preconfigured that the AMF sends the first information and the second information to the first reader upon obtaining the inventory operation information. It is equivalent to that, upon obtaining the inventory operation information, the AMF sends the first information and the second information to the first reader by default.

Optionally, in this application, the first information and/or the second information may be carried in an N2 message.

In addition, the AMF may send the first information and the second information to the first reader at two separate times. For example, the first information and the second information may be carried in different messages. Alternatively, the AMF may send the first information and the second information to the first reader at the same time. For example, the first information and the second information may be carried in a same message. The message herein may be an N2 message.

The first information and the second information are described below in detail. Specifically:
1. The first information may include second indication information and/or mask information.

The second indication information is used to trigger the first reader to send a first select command, so that the first type of terminal within the coverage of the first reader responds to the first select command. For example, the first type of terminal within the coverage of the first reader sends an identifier of the first type of terminal to the first reader.

Optionally, the second indication information may be referred to as first random access indication information. The name of the second indication information is not limited in this application.

The mask information may be used to trigger the first reader to send a second select command, so that the first type of terminal corresponding to the mask information responds to the second select command. For example, the first type of terminal corresponding to the mask information sends an identifier of the first type of terminal to the first reader. The second select command may include the mask information. For the mask information, refer to the foregoing related description, and details are not described herein again.

Optionally, in the case where the first information includes the second indication information and the mask information, it may be considered that the first information is used to trigger the first reader to send the second select command. For example, the first type of terminal corresponding to the mask information sends an identifier of the first type of terminal to the first reader.

The first select command and the second select command are merely named for differentiation, and the specific names of the first select command and the second select command do not limit the scope of protection of this application. For example, the first select command may also be a third paging message, and the second select command may also be a fourth paging message. This is not limited in this application. In a possible implementation, the paging message (for example, a first paging message, a second paging message, the third paging message, or the fourth paging message) mentioned in this application may also be referred to as an A-IoT paging message. For example, the first paging message may also be referred to as a first A-IoT paging message, the second paging message may also be referred to as a second A-IoT paging message, the third paging message may also be referred to as a third A-IoT paging message, and the fourth paging message may also be referred to as a fourth A-IoT paging message. This is not limited in this application.

Optionally, the AMF may know the mask information by using at least one of the following implementations. Specifically:
① The inventory operation information may further include the mask information.
② The AMF may determine the mask information based on the identifier information indicating the service requester in the inventory operation information. For example, the identifier information indicating the service requester is associated with the mask information. In this way, the AMF may determine the mask information based on the identifier information indicating the service requester and an association relationship between the identifier information indicating the service requester and the mask information.

For example, assuming that the service requester is an AF, the identifier information indicating the service requester may include an identifier of the AF and/or an address of the AF, and the AMF may determine the mask information based on the identifier of the AF and/or the address of the AF. For example, the identifier of the AF and/or the address of the AF are associated with the mask information. In this way, the AMF may determine the mask information based on the identifier of the AF and/or the address of the AF and an association relationship between the identifier of the AF and/or the address of the AF and the mask information.

It should be noted that the implementation ① or ② herein may be applicable to the process by which "the AMF determines, based on the inventory operation information, the type of the terminal to be operated, and sends the first information to the first reader based on the type of the terminal to be operated", or the process by which "it is predefined or preconfigured that the AMF sends the first information to the first reader upon obtaining the inventory operation information".

2. The second information includes third indication information and/or group identifier information.

The third indication information is used to trigger the first reader to send a first paging message, so that the second type of terminal within the coverage of the first reader responds to the first paging message. For example, the second type of terminal within the coverage of the first reader sends an identifier of the second type of terminal to the first reader.

Optionally, the third indication information may be referred to as a paging message or second random access indication information. The name of the third indication information is not limited in this application.

The group identifier information may be used to trigger the first reader to send a second paging message, so that the second type of terminal corresponding to the group identifier information responds to the second paging message. For example, the second type of terminal corresponding to the group identifier information sends an identifier of the second type of terminal to the first reader. The second paging message may include the group identifier information.

Optionally, in the case where the second information includes the third indication information and the group identifier information, it may be considered that the second information is used to trigger the first reader to send the second paging message. For example, the second type of terminal corresponding to the group identifier information sends an identifier of the second type of terminal to the first reader.

Optionally, the AMF may know the group identifier information by using at least one of the following implementations. Specifically:
① The inventory operation information may further include the group identifier information.
② The AMF may determine the group identifier information based on the identifier information indicating the service requester in the inventory operation information. For example, the identifier information indicating the service requester is associated with the group identifier information. In this way, the AMF may determine the group identifier information based on the identifier information indicating the service requester and an association relationship between the identifier information indicating the service requester and the group identifier information.

For example, assuming that the service requester is an AF, the identifier information indicating the service requester may include an identifier of the AF and/or an address of the AF, and the AMF may determine the group identifier information based on the identifier of the AF and/or the address of the AF. For example, an association is made between the identifier of the AF and/or the address of the AF and the group identifier information. In this way, the AMF may determine the group identifier information based on the identifier of the AF and/or the address of the AF and an association relationship between the identifier of the AF and/or the address of the AF and the group identifier information.

It should be noted that the implementation ① or ② herein may be applicable to the process by which "the AMF determines, based on the inventory operation information, the type of the terminal to be operated, and sends the first information to the first reader based on the type of the terminal to be operated", or the process by which "it is predefined or preconfigured that the AMF sends the first information to the first reader upon obtaining the inventory operation information".

In a possible implementation, the identifiers of the one or more terminals may be carried in an ambient internet of things passive service response (for example, Nnef_ A-IoT _ Passive _Service Response) message. For example, the one or more terminals belong to the first type of terminal, and the identifiers of the one or more terminals are carried in the Nnef_ A-IoT _ Passive _Service Response message.

In another possible implementation, the identifiers of the one or more terminals may be carried in an Nnef ambient internet of things active service response (for example, Nnef_ A-IoT _Active_Service Response) message. For example, the one or more terminals belong to the second type of terminal, and the identifiers of the one or more terminals are carried in the Nnef_ A-IoT _Active_Service Response message.

In still another possible implementation, the identifiers of the one or more terminals may be carried in an Nnef ambient internet of things service response (for example, Nnef_AIoT_Service Response) message. For example, the one or more terminals include the first type of terminal and the second type of terminal, and the identifiers of the one or more terminals may be carried in the Nnef_AIoT_Service Response message.

Optionally, the Nnef_ A-IoT _ Passive _Service Response message and the Nnef_ A-IoT _Active_Service Response message may be respectively simplified as an Nnef passive service response (for example, Nnef_ Passive _Service Response) message and an Nnef active service response (for example, Nnef_Active_Service Response) message.

It can be seen that, in the foregoing embodiment, the AMF may receive the inventory operation information, and then may send the first information and/or the second information to the first reader based on the inventory operation information, so that the first reader can flexibly use a suitable inventory mode for inventory. In addition, the AMF may determine a type of a terminal to be inventoried based on the inventory operation information, and then send the first information and/or the second information to the first reader based on the type of the terminal to be inventoried, so that the AMF can more accurately know which type of terminal the first reader should be triggered to inventory. Therefore, this can reduce a problem of missed inventory or triggering unwanted signaling overheads, and can further ensure inventory efficiency.

In a possible implementation, the AMF in FIG. 4 may not be co-deployed with the TMF. In this case, step 401 may be understood as that, the service requester sends a message from the service requester to the TMF (via the NEF), and the TMF obtains the inventory operation information based on the message from the service requester, and sends the inventory operation information to the AMF. Alternatively, the service requester sends a message from the service requester to the TMF (via the NEF), and the TMF determines, based on the message from the service requester, the type of the terminal to be operated, and sends the type of the terminal to be operated to the AMF. Optionally, the TMF may further send information carried in the message from the service requester to the AMF, such as the mask information and the group identifier information, which are not listed one by one herein. Optionally, step 405 may be understood as that, the AMF sends the identifiers of the one or more terminals to the TMF, and the TMF sends the identifiers of the one or more terminals to the service requester (via the NEF).

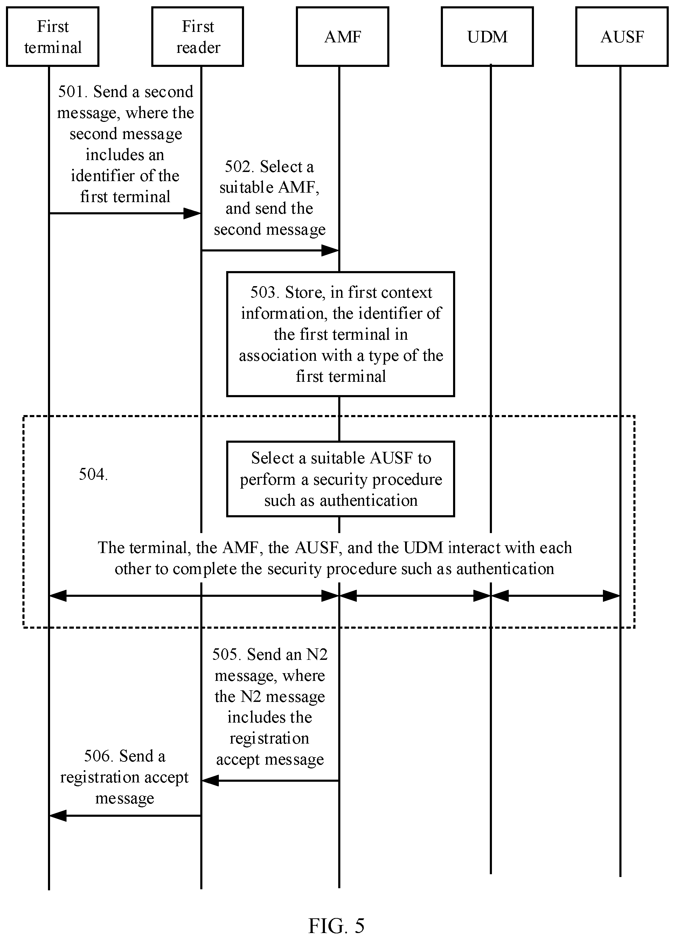

It should be understood that, for implementation ④ of the above-described implementation 4, the second type of terminal may perform registration, so that the AMF can store the association relationship between the identifier of the second type of terminal and the type thereof. Because the association relationship may be stored in the context, the AMF may determine the type of the terminal based on the context. It is to be understood that, a registration process of the second type of terminal may occur before "the AMF obtains, based on the identifier of the terminal to be operated, the first context information corresponding to the identifier of the terminal to be operated ". For example, the terminal to be operated includes a first terminal, and before the AMF obtains, based on the identifier of the terminal to be operated, the first context information corresponding to the identifier of the terminal to be operated, the method further includes the following: when the AMF receives a second message from the first terminal, a type of the first terminal is the second type, and the second message includes an identifier of the first terminal; and the identifier of the first terminal is stored in the first context information in association with the type of the first terminal. A process of storing, by the AMF, the identifier of the first terminal in association with the type of the first terminal is described below in detail with reference to FIG. 5.

With reference to FIG. 5, FIG. 5 is a schematic flowchart of another communication method according to an embodiment of this application. The embodiment shown in FIG. 5 may be combined with the embodiment shown in FIG. 4. For example, on the basis of the embodiment shown in FIG. 4, the following steps are further included.

501. The first terminal sends the second message to the first reader, where the second message includes the identifier of the first terminal.

Correspondingly, the first reader receives the second message from the first terminal. Optionally, the second message may be, for example, a registration request message.

502. The first reader selects a suitable AMF, and sends the second message to the AMF.

Correspondingly, the AMF receives the second message from the first reader. That is, the AMF has received the second message. In a possible implementation, because only the second type of terminal can actively send the registration request message to the first reader, the AMF can know the type of the first terminal upon receiving the second message (that is, the registration request message). In another possible implementation, the reader may send the type of the first terminal to the AMF. For example, the reader may know the type of the first terminal (for example, based on a physical layer or an air interface mechanism), and send the type of the first terminal to the AMF. In still another possible implementation, the AMF may receive the identifier or capability information of the first terminal, to know the type of the first terminal.

The first reader may select, for example, an AMF serving the terminal based on a location of the terminal, a type of the terminal, or an access technology type (for example, an ambient internet of things terminal or an ambient internet of things technology), and a specific process thereof is not limited in this application.

503. The AMF stores, in the first context information, the identifier of the first terminal in association with the type of the first terminal.

Optionally, the terminal to be operated may further include another terminal, and a type of the another terminal is the second type. The AMF may further store, in the first context information, an identifier of the another terminal in association with the corresponding type. Alternatively, the AMF may separately store the identifier of the another terminal and the corresponding type. This is not limited herein.

504. The AMF selects a suitable AUSF to perform a security procedure such as authentication. The terminal, the AMF, the AUSF, and the UDM interact with each other to complete the security procedure such as authentication.

505. After mutual authentication between the terminal and the network side succeeds, the AMF sends the N2 message to the first reader, where the N2 message includes the registration accept message.

Correspondingly, the first reader receives the N2 message from the AMF. The registration accept message indicates that the first terminal has successfully registered with the network.

506. The first reader sends the registration accept message to the first terminal.

Correspondingly, the first terminal receives the registration accept message via the first reader.

It can be seen that, in the foregoing embodiment, in the registration process, the AMF may store, in the first context information, the identifier of the first terminal in association with the type of the first terminal, so that the AMF may subsequently know the type of the first terminal based on the identifier of the first terminal, thereby improving efficiency. In addition, the AMF may further determine which type of terminal should be inventoried. This ensures smooth execution of the solution.

Optionally, the embodiment shown in FIG. 5 may be performed before step 402 in FIG. 4, for example, before the AMF obtains, based on the identifier of the terminal to be operated, the first context information corresponding to the identifier of the terminal to be operated.

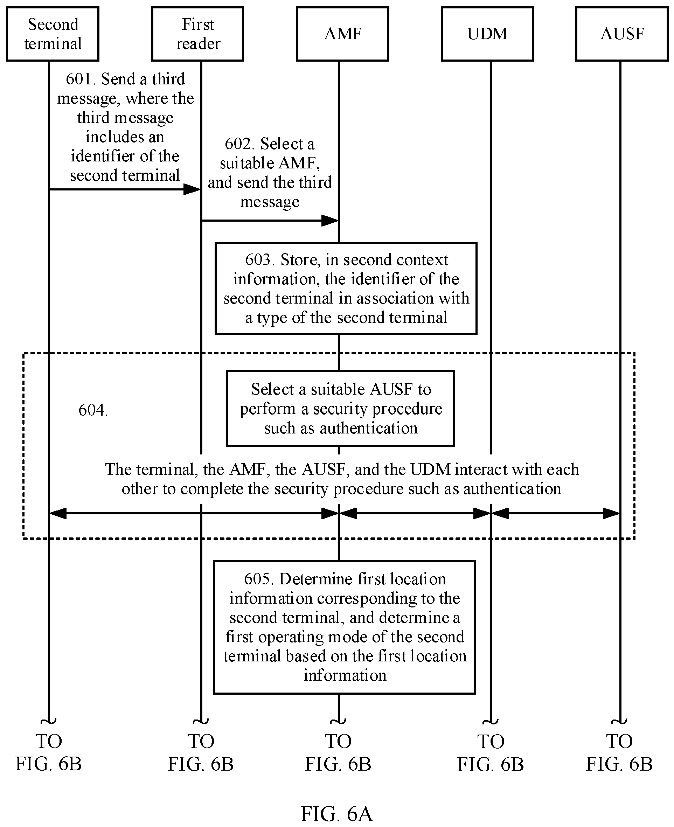

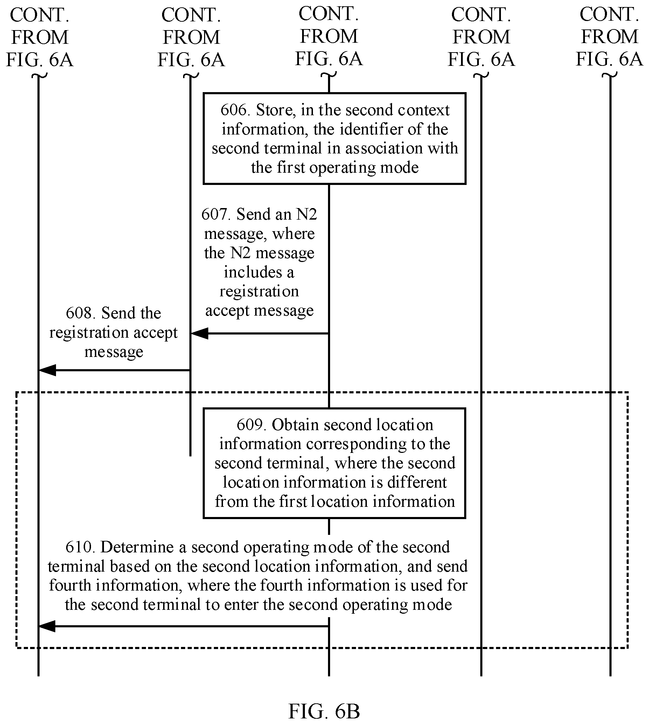

It should be understood that, for implementation ⑤ of the above-described implementation 4, the second type of terminal may perform registration, so that the AMF can determine the operating mode of the second type of terminal based on the location information corresponding to the second type of terminal, and store the association relationship between the identifier of the second type of terminal and the operating mode thereof. Because the association relationship may be stored in the context, the AMF may determine the type of the terminal based on the context. A registration process of the second type of terminal may occur before "the AMF obtains, based on the identifier of the terminal to be operated, the second context information corresponding to the identifier of the terminal to be operated ". For example, the terminal to be operated includes a second terminal, and before the AMF obtains, based on the identifier of the terminal to be operated, the second context information corresponding to the identifier of the terminal to be operated, the method further includes the following: the AMF receives a third message from the second terminal, where the third message includes an identifier of the second terminal; the AMF determines first location information corresponding to the second terminal; and the AMF determines a first operating mode of the second terminal based on the first location information; and the AMF stores, in the second context information, the identifier of the second terminal in association with the first operating mode. A process of storing, by the AMF, the identifier of the second terminal in association with the operating mode thereof is described below in detail with reference to FIG. 6A and FIG. 6B.

With reference to FIG. 6A and FIG. 6B, FIG. 6A and FIG. 6B are a schematic flowchart of another communication method according to an embodiment of this application. The embodiment shown in FIG. 6A and FIG. 6B may be combined with the embodiment shown in FIG. 4. For example, on the basis of the embodiment shown in FIG. 4, the following steps are further included.

601. The second terminal sends the third message to the first reader, where the third message includes the identifier of the second terminal.

Correspondingly, the first reader receives the third message from the second terminal. Optionally, the third message may be, for example, a registration request message.

602. The first reader selects a suitable AMF, and sends the third message to the AMF.

Correspondingly, the AMF receives the third message from the first reader. That is, the AMF has received the third message. In a possible implementation, because only the second type of terminal can actively send the registration request message to the first reader, the AMF can know the type of the first terminal upon receiving the third message (that is, the registration request message). In another possible implementation, the reader may send the type of the first terminal to the AMF. For example, the reader may know the type of the first terminal (for example, based on a physical layer or an air interface mechanism), and send the type of the first terminal to the AMF. In still another possible implementation, the AMF may receive the identifier or capability information of the first terminal, to know the type of the first terminal.

The first reader may select, for example, an AMF serving the terminal based on a location of the terminal, a type of the terminal, or an access technology type (for example, an ambient internet of things terminal or an ambient internet of things technology), and a specific process thereof is not limited in this application.

603. The AMF stores, in the second context information, the identifier of the second terminal in association with the type of the second terminal.

Optionally, the terminal to be operated may further include another terminal, and a type of the another terminal is the second type. The AMF may further store, in the second context information, an identifier of the another terminal in association with the corresponding type. Alternatively, the AMF may separately store the identifier of the another terminal and the corresponding type. This is not limited herein.

604. The AMF selects a suitable AUSF to perform a security procedure such as authentication. The terminal, the AMF, the AUSF, and the UDM interact with each other to complete the security procedure such as authentication.

605. After mutual authentication between the terminal and the network side succeeds, the AMF determines the first location information corresponding to the second terminal, and determines the first operating mode of the second terminal based on the first location information.

Optionally, determining, by the AMF, the first location information corresponding to the second terminal may include, for example, determining, by the AMF, the first location information based on a location of the first reader that forwards the third message. The specific process is not limited in this application. In addition, the first location information may be determined in other manners, which are not listed one by one herein.

The first operating mode is the passive mode or the active mode. For example, the operating mode corresponding to the first location information is the passive mode, and the first operating mode of the second terminal is the passive mode. The operating mode corresponding to the first location information is the active mode, and the first operating mode is the active mode.

606. The AMF stores, in the second context information, the identifier of the second terminal in association with the first operating mode.

In a possible implementation, it may be considered that there is an association relationship between the identifier of the second terminal and the type of the second terminal, and that there is an association relationship between the identifier of the second terminal and the first operating mode. In another possible implementation, it may be considered that there is an association relationship between the identifier of the second terminal, the type of the second terminal, and the first operating mode. The two understanding manners may be present, for example, in the form of a table. It should be understood that, this is merely an example and is not limited to the form of a table.

Optionally, the terminal to be operated may further include another terminal, and a type of the another terminal is the second type. The AMF may further store, in the second context information, an identifier of the another terminal, a type of the another terminal, in association with an operating mode thereof. Alternatively, the AMF may separately store the identifier of the another terminal, the type of the another terminal, and the operating mode thereof. This is not limited herein.

607. The AMF sends the N2 message to the first reader, where the N2 message includes the registration accept message.

Correspondingly, the first reader receives the N2 message from the AMF. The registration accept message indicates that the second terminal has successfully registered with the network.

Optionally, the AMF may further send third information to the second terminal, where the third information is used for the second terminal to enter the first operating mode. For example, the registration accept message may further include the third information or the like.

It should be noted that, information (such as the third information) mentioned in this application being used for the terminal to enter a corresponding operating mode may be understood as the information being at least one field or at least one bit. The at least one field or the at least one bit is used for the terminal to enter the corresponding operating mode. For example, the third information is 1 bit, which corresponds to two states '0' and '1'. '0' indicates that the second terminal enters the first operating mode, and '1' indicates that the second terminal does not enter the first operating mode. It is also true the other way around.

Optionally, the AMF may further indicate the first location information to the second terminal. To be specific, the AMF indicates a registration area of the second type of terminal to the second type of terminal, so that the second type of terminal triggers a registration procedure (for example, a mobility registration update procedure) or a tracking area update procedure upon leaving the area. For example, the registration accept message may further include the first location information or the like.

608. The first reader sends the registration accept message to the second terminal.

Correspondingly, the second terminal receives the registration accept message from the first reader.

Optionally, after step 608, assuming that the second terminal moves from an area indicated by the first location information to an area indicated by second location information, the second terminal may perform re-registration or a tracking area update procedure. For another example, after the core network has inventoried the second terminal in the area indicated by the second location information, in this case, steps 609 and 610 may be further included.

609. The AMF obtains the second location information corresponding to the second terminal, where the second location information is different from the first location information.

Optionally, that the AMF obtains the second location information corresponding to the second terminal may be understood as that, the AMF receives a fourth message from the second terminal via a second reader, and determines the second location information based on the second reader or a location of the second reader. The first reader may be the same as or different from the second reader. The fourth message includes the identifier of the second terminal. The fourth message may be, for example, a registration request message.

610. The AMF determines a second operating mode of the second terminal based on the second location information, and sends fourth information to the second terminal, where the fourth information is used for the second terminal to enter the second operating mode.

Correspondingly, the second terminal receives the fourth information from the AMF. For example, the second terminal may receive the fourth information from the AMF via the second reader. Optionally, the fourth information may be carried in a registration response message. The registration response message indicates that the second terminal has successfully registered with the network.

The second operating mode may be the passive mode or the active mode.

Optionally, the AMF may further update, in the second context information, the first operating mode to the second operating mode. It is to be understood that, when the first operating mode is the same as the second operating mode, the AMF may not perform any action. When the first operating mode is different from the second operating mode, the AMF may update, in the second context information, the first operating mode to the second operating mode.

It can be seen that, in the foregoing embodiment, in the registration process, the AMF may store, in the second context information, the identifier of the second terminal in association with the operating mode of the second terminal, so that the AMF may subsequently know the operating mode of the second terminal based on the identifier of the second terminal, and further determine which type of terminal should be inventoried. This improves efficiency and ensures smooth execution of the solution. In addition, the AMF may further update the operating mode of the second terminal, to ensure that the operating mode of the second terminal matches the operating mode at the corresponding location, so that a subsequent inventory process can be smoothly performed.

Optionally, steps 601 to 608 in the embodiment shown in FIG. 6A and FIG. 6B may be performed before step 402 in FIG. 4, for example, before the second context information corresponding to the identifier of the terminal to be operated is obtained based on the identifier of the terminal to be operated. Steps 609 and 610 in the embodiment shown in FIG. 6A and FIG. 6B may be performed simultaneously with, before, or after any one of steps 402 to 405. This is not limited herein.

Optionally, this application provides merely an example of a specific process by which the AMF triggers the first reader to perform the inventory operation on the first type of terminal and the second type of terminal. It should be understood that this solution may also be used when inventory processes vary with different types of terminals.

It is to be understood that, to implement the foregoing functions, the device includes corresponding hardware structures and/or software modules for performing the functions. A person skilled in the art should be easily aware that, in combination with units and algorithm steps of the examples described in embodiments disclosed herein, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that such an implementation goes beyond the scope of this application.

In embodiments of this application, the AMF or the AF may be divided into functional modules based on the above-described method examples. For example, each functional module may be obtained through division corresponding to each function, or two or more functions may be integrated into one processing module. The integrated module may be implemented either in the form of hardware, or in the form of a software functional module. It should be noted that, in embodiments of this application, module division is an example, and is merely a logical function division. In actual implementation, other division manners may be possible.

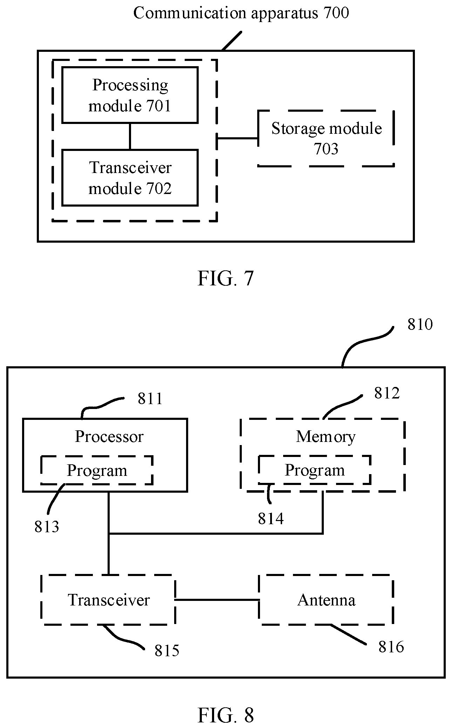

With reference to FIG. 7, FIG. 7 is a diagram of a structure of a communication apparatus according to an embodiment of this application. The communication apparatus 700 may be for use in the method shown in any one of the embodiments in FIG. 4 to FIG. 6A and FIG. 6B. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement the AMF or the AF in any one of the above-described method embodiments, or to implement functions of the network element in any one of the above-described method embodiments. The network element or network function may be a network element in a hardware device, a software function running on dedicated hardware, or an instantiated virtualization function on a platform (for example, a cloud platform). Optionally, the communication apparatus 700 may further include a storage module 703, configured to store program code and data of the communication apparatus 700.

In an instance, when the communication apparatus serves as an AMF or a chip for use in the AMF, and performs the steps performed by the AMF in the above-described method embodiments, the transceiver module 702 is configured to specifically perform the sending and/or receiving actions performed by the AMF in any one of the embodiments in FIG. 4 to FIG. 6A and FIG. 6B, for example, support the AMF in performing another process of the technology described herein. The processing module 701 may be configured to support the communication apparatus 700 in performing the processing action in the above-described method embodiments, for example, support the AMF in performing another process of the technology described herein.

For example, the transceiver module 702 is configured to: receive operation information from a service requester, where the operation information is used to perform an operation on a terminal, and the operation includes an inventory operation; send first information and/or second information to a first reader based on the operation information, where the first information is used for the first reader to perform the inventory operation on a first type of terminal, and the second information is used for the first reader to perform the inventory operation on a second type of terminal; and receive an operation result sent by the first reader, and send the operation result to the service requester, where the operation result includes identifiers of one or more terminals, and the type of the one or more terminals is a first type and/or a second type.

Optionally, when sending the first information and/or the second information to the first reader based on the operation information, the processing module 701 is configured to determine, based on the operation information, a type of a terminal to be operated, where the terminal to be operated includes a first type of terminal and/or a second type of terminal, and the first type is different from the second type; and the transceiver module 702 is configured to send the first information and/or the second information to the first reader based on the type of the terminal to be operated.

Optionally, when determining, based on the operation information, the type of the terminal to be operated, the operation information is carried in a first message, a message name of which indicates the type of the terminal to be operated; or the operation information includes first indication information that indicates the type of the terminal to be operated; or the operation information includes location information corresponding to the terminal to be operated, and the processing module 701 is configured to determine, based on the location information corresponding to the terminal to be operated, the type of the terminal to be operated; or the operation information includes an identifier of the terminal to be operated, and the processing module 701 is configured to determine, based on the identifier of the terminal to be operated, the type of the terminal to be operated; or the operation information represents an identifier of the service requester and/or an address of the service requester, and the processing module 701 is configured to determine, based on the identifier of the service requester and/or the address of the service requester, the type of the terminal to be operated.

Optionally, when determining, based on the location information corresponding to the terminal to be operated, the type of the terminal to be operated, the processing module 701 is configured to: determine, based on the location information corresponding to the terminal to be operated, a network in which the terminal to be operated is located; and determine, based on the network in which the terminal to be operated is located, the type of the terminal to be operated.

Optionally, when determining, based on the location information corresponding to the terminal to be operated, the type of the terminal to be operated, the processing module 701 is configured to: determine, based on the location information corresponding to the terminal to be operated, an operating mode of the terminal to be operated, where the operating mode of the terminal to be operated corresponds to the first type and/or the second type.

Optionally, when determining, based on the identifier of the terminal to be operated, the type of the terminal to be operated, the processing module 701 is configured to: obtain, based on the identifier of the terminal to be operated, subscription data corresponding to the terminal to be operated, where the subscription data includes the type of the terminal to be operated; or obtain, based on the identifier of the terminal to be operated, first context information corresponding to the identifier of the terminal to be operated, where the first context information includes an association relationship between the identifier of the terminal to be operated and the type of the terminal to be operated; or obtain, based on the identifier of the terminal to be operated, second context information corresponding to the identifier of the terminal to be operated, where the second context information includes an association relationship between the identifier of the terminal to be operated and an operating mode of the terminal to be operated, and the operating mode of the terminal to be operated corresponds to the first type and/or the second type.

Optionally, when determining, based on the identifier of the service requester and/or the address of the service requester, the type of the terminal to be operated, the processing module 701 is configured to obtain subscription data corresponding to the service requester based on an identifier of the service requester or an address of the service requester, where the subscription data includes the type of the terminal to be operated.

Optionally, the terminal to be operated includes a first terminal, and the transceiver module 702 is further configured such that when a second message from the first terminal is received, a type of the first terminal is the second type, and the second message includes an identifier of the first terminal; and the processing module 701 is further configured to store, in the first context information, the identifier of the first terminal in association with the type of the first terminal.

Optionally, the terminal to be operated includes a second terminal, and the transceiver module 702 is further configured to receive a third message from the second terminal, where the third message includes an identifier of the second terminal; and the processing module 701 is further configured to: determine first location information corresponding to the second terminal; determine a first operating mode of the second terminal based on the first location information, where the first operating mode is an active mode or an active mode; and store, in the second context information, the identifier of the second terminal in association with the first operating mode.

Optionally, the transceiver module 702 is further configured to send third information to the second terminal, where the third information is used for the second terminal to enter the first operating mode.

Optionally, the processing module 701 is further configured to: detect second location information corresponding to the second terminal, where the second location information is different from the first location information; and determine a second operating mode of the second terminal based on the second location information, where the second operating mode is an active mode or an active mode; and the transceiver module 702 is further configured to send fourth information to the second terminal, where the fourth information is used for the second terminal to enter the second operating mode.

Optionally, the processing module 701 is further configured to update, in the second context information, the first operating mode to the second operating mode.

In an instance, when the communication apparatus serves as an AF or a chip for use in the AF, and performs the steps performed by the AF in the above-described method embodiments, the transceiver module 702 is configured to specifically perform the sending and/or receiving actions performed by the AF in any one of the embodiments in FIG. 4 to FIG. 6A and FIG. 6B, for example, support the AF in performing another process of the technology described herein. The processing module 701 may be configured to support the communication apparatus 700 in performing the processing action in the above-described method embodiments, for example, support the AF in performing another process of the technology described herein.

For example, the transceiver module 702 is configured to: send operation information to a first network element, where the operation information is used to perform an operation on a terminal, and the operation includes an inventory operation; and receive an operation result from the first network element. The operation result includes identifiers of one or more terminals, and a type of the one or more terminals is a first type and/or a second type, the first type being different from the second type. The operation result is determined based on first information and/or second information, the first information is used for a first reader to perform the inventory operation on the first type of terminal, and the second information is used for the first reader to perform the inventory operation on the second type of terminal.

In a possible implementation, when the AMF or the AF is a chip, the transceiver module 702 may be a communication interface, a pin, a circuit, or the like. The communication interface may be configured to input data to be processed to a processor, and may output a processing result of the processor to the outside. In a specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 701 may be a processor. The processor may execute computerexecutable instructions stored in the storage module, to cause the chip to perform the methods in any one of the embodiments shown in FIG. 4 to FIG. 6A and FIG. 6B. Further, the processor may include a controller, an arithmetic logic unit, and a register. For example, the controller is mainly responsible for instruction decoding, and issuing a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. In a specific implementation, a hardware architecture of the processor may be an ASIC architecture, a microprocessor without interlocked piped stages (microprocessor without interlocked piped stages architecture, MIPS) architecture, an advanced reduced instruction set computer machines (advanced RISC machines, ARM) architecture, a second processor (network processor, NP) architecture, or the like. The processor may be a singlecore or multi-core processor. The storage module may be a storage module inside the chip, for example, a register or a cache. Alternatively, the storage module may be a storage module, for example, a ROM or another type of static storage device that can store static information and instructions, or a RAM, located outside the chip.

It should be noted that functions respectively corresponding to the processor and the interface may be implemented by using a hardware design, or may be implemented by using a software design, or may be implemented by using a combination of software and hardware. This is not limited herein.

FIG. 8 is a diagram of a structure of another communication apparatus according to an embodiment of this application. It is to be understood that the communication apparatus 810 includes means in necessary forms such as modules, units, elements, circuits, or interfaces, which are appropriately configured together to perform the solution. The communication apparatus 810 may be the foregoing AMF or AF, or a component (for example, a chip) in these devices, to implement the methods described in the above-described method embodiments. The communication apparatus 810 includes one or more processors 811. The processor 811 may be a general-purpose processor, a dedicated processor, or the like. For example, the processor may be a baseband processor or a central processing unit. The baseband processor may be configured to process a communication protocol and communication data. The central processing unit may be configured to control the communication apparatus (for example, an AMF, an AF, or a chip), execute a software program, and process data of the software program.

Optionally, in a design, the processor 811 may include a program 813 (sometimes also referred to as code or instructions), and the program 813 may be run on the processor 811, to cause the communication apparatus 810 to perform the methods described in the foregoing embodiments. In still another possible design, the communication apparatus 810 includes a circuit (not shown in FIG. 8), which is configured to implement functions such as the AMF and the AF in the foregoing embodiments. Optionally, the communication apparatus 810 may include one or more memories 812, having a program 814 (sometimes also referred to as code or instructions) stored thereon. The program 814 may be run on the processor 811, to cause the communication apparatus 810 to perform the methods described in the foregoing method embodiments.

Optionally, the processor 811 and/or the memory 812 may further store data. The processor and the memory may be separately disposed or integrated together.

Optionally, the communication apparatus 810 may further include a transceiver 815 and/or an antenna 816. The processor 811 may sometimes also be referred to as a processing unit, which controls the communication apparatus (for example, an AMF or an AF). The transceiver 815 may sometimes also be referred to as a transceiver unit, a transceiver machine, a transceiver circuit, a transceiver, or the like, which is configured to implement receiving and sending functions of the communication apparatus through the antenna 816.

An embodiment of this application further provides a communication apparatus. The communication apparatus includes at least one processor. The at least one processor is configured to perform the method according to any one of the embodiments in FIG. 4 to FIG. 6A and FIG. 6B.

An embodiment of this application further provides a computer-readable storage medium. The computer-readable storage medium stores computer instructions. When the computer instructions are executed, a computer is enabled to perform the method according to any one of the embodiments in FIG. 4 to FIG. 6A and FIG. 6B.

An embodiment of this application further provides a computer program product. The computer program product includes computer program code. When the computer program code is run on a computer, the computer is enabled to perform the method according to any one of the embodiments in FIG. 4 to FIG. 6A and FIG. 6B.

An embodiment of this application further provides a chip. The chip includes at least one processor and an interface. The processor is configured to read and execute instructions stored in a memory. When the instructions are run, the chip is enabled to perform the method according to any one of the embodiments in FIG. 4 to FIG. 6A and FIG. 6B.

The foregoing units described as separate parts may or may not be physically separate, and parts displayed as units may or may not be physical units. That is, they may be located in one position or distributed on a plurality of network units. Some or a part of the units may be selected based on actual requirements to achieve the objectives of the solutions of embodiments in this application. In addition, various network element units in embodiments of this application may be integrated into one processing unit, or each of the units may be independently present physically, or two or more units may be integrated into one unit. The integrated unit may be implemented either in the form of hardware, or in the form of software network element unit.

When the integrated unit is implemented in the form of software network element unit and sold or used as an independent product, the integrated unit may be stored in a computer-readable storage medium. Based on such an understanding, an essentially contributing part of the technical solutions of this application or all or a part of the technical solutions may be embodied in the form of software product. The computer software product is stored in a storage medium, and includes a plurality of instructions to cause a computer device (which may be a personal computer, an AMF, a cloud server, an AF, or the like) to perform all or a part of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc.

## Claims

1. A communication method, comprising:
receiving operation information from a service requester, wherein the operation information is used to perform an operation on a terminal, and the operation comprises an inventory operation;
determining, based on the operation information, a type of a terminal to be operated, wherein the terminal to be operated comprises a first type of terminal and/or a second type of terminal, and the first type is different from the second type;
sending first information and/or second information to a first reader based on the type of the terminal to be operated, wherein the first information is used for the first reader to perform the inventory operation on the first type of terminal, and the second information is used for the first reader to perform the inventory operation on the second type of terminal; and
receiving an operation result sent by the first reader, and sending the operation result to the service requester, wherein the operation result comprises identifiers of one or more terminals, and the one or more terminals belong to the terminal to be operated.

2. The method according to claim 1, wherein determining, based on the operation information, the type of the terminal to be operated comprises:
the operation information being carried in a first message, a message name of which indicates the type of the terminal to be operated; or
the operation information comprising first indication information that indicates the type of the terminal to be operated; or
the operation information comprising location information corresponding to the terminal to be operated, and determining, based on the location information corresponding to the terminal to be operated, the type of the terminal to be operated; or
the operation information comprising an identifier of the terminal to be operated, and determining, based on the identifier of the terminal to be operated, the type of the terminal to be operated; or
the operation information comprising identifier information indicating the service requester, and determining, based on the identifier information indicating the service requester, the type of the terminal to be operated.

3. The method according to claim 1 or 2, wherein determining, based on the location information corresponding to the terminal to be operated, the type of the terminal to be operated comprises:
determining, based on the location information corresponding to the terminal to be operated, a network in which the terminal to be operated is located; and
determining, based on the network in which the terminal to be operated is located, the type of the terminal to be operated.

4. The method according to claim 3, wherein
the network in which the terminal to be operated is located comprises a local area network or a non-public network, and the type of the terminal to be operated comprises the first type; and/or
the network in which the terminal to be operated is located comprises a wide area network or a public network, and the type of the terminal to be operated comprises the second type.

5. The method according to claim 1 or 2, wherein determining, based on the location information corresponding to the terminal to be operated, the type of the terminal to be operated comprises:
determining, based on the location information corresponding to the terminal to be operated, an operating mode of the terminal to be operated, wherein the operating mode of the terminal to be operated corresponds to the first type and/or the second type.

6. The method according to claim 1 or 2, wherein determining, based on the identifier of the terminal to be operated, the type of the terminal to be operated comprises:
obtaining, based on the identifier of the terminal to be operated, subscription data corresponding to the terminal to be operated, wherein the subscription data comprises the type of the terminal to be operated; or
obtaining, based on the identifier of the terminal to be operated, first context information corresponding to the identifier of the terminal to be operated, wherein the first context information comprises an association relationship between the identifier of the terminal to be operated and the type of the terminal to be operated; or
obtaining, based on the identifier of the terminal to be operated, second context information corresponding to the identifier of the terminal to be operated, wherein the second context information comprises an association relationship between the identifier of the terminal to be operated and an operating mode of the terminal to be operated, and the operating mode of the terminal to be operated corresponds to the first type and/or the second type.

7. The method according to claim 5 or 6, wherein
the operating mode of the terminal to be operated comprises a passive mode, and the operating mode of the terminal to be operated corresponds to the first type; and/or
the operating mode of the terminal to be operated comprises an active mode, and the operating mode of the terminal to be operated corresponds to the second type.

8. The method according to claim 1 or 2, wherein determining, based on the identifier information indicating the service requester, the type of the terminal to be operated comprises:
obtaining, based on the identifier information indicating the service requester, subscription data corresponding to the service requester, wherein the subscription data comprises the type of the terminal to be operated.

9. The method according to any one of claims 1 to 8, wherein
the first information comprises second indication information or mask information, wherein the second indication information is used to trigger the first reader to send a first select command, so that the first type of terminal within coverage of the first reader responds to the first select command; and the mask information is used to trigger the first reader to send a second select command, so that the first type of terminal corresponding to the mask information responds to the second select command.

10. The method according to any one of claims 1 to 8, wherein
the second information comprises third indication information or group identifier information, wherein the third indication information is used to trigger the first reader to send a first paging message, so that the second type of terminal within coverage of the first reader responds to the first paging message; and the group identifier information is used to trigger the first reader to send a second paging message, so that the second type of terminal corresponding to the group identifier information responds to the second paging message.

11. The method according to claim 6, wherein the terminal to be operated comprises a first terminal, and prior to the obtaining, based on the identifier of the terminal to be operated, the first context information corresponding to the identifier of the terminal to be operated, the method further comprises:
when a second message from the first terminal is received, a type of the first terminal being the second type, and the second message comprising an identifier of the first terminal; and
storing, in the first context information, the identifier of the first terminal in association with the type of the first terminal.

12. The method according to claim 6, wherein the terminal to be operated comprises a second terminal, and prior to the obtaining, based on the identifier of the terminal to be operated, the second context information corresponding to the identifier of the terminal to be operated, the method further comprises:
receiving a third message from the second terminal, wherein the third message comprises an identifier of the second terminal;
determining first location information corresponding to the second terminal;
determining a first operating mode of the second terminal based on the first location information, wherein the first operating mode is a passive mode or an active mode; and
storing, in the second context information, the identifier of the second terminal in association with the first operating mode.

13. The method according to claim 12, further comprising:
sending third information to the second terminal, wherein the third information is used for the second terminal to enter the first operating mode.

14. The method according to claim 12 or 13, further comprising:
detecting second location information corresponding to the second terminal, wherein the second location information is different from the first location information;
determining a second operating mode of the second terminal based on the second location information, wherein the second operating mode is a passive mode or an active mode; and
sending fourth information to the second terminal, wherein the fourth information is used for the second terminal to enter the second operating mode.

15. The method according to claim 14, further comprising:
updating, in the second context information, the first operating mode to the second operating mode.

16. A communication method, comprising:
sending operation information to a first network element, wherein the operation information is used to perform an operation on a terminal, the operation comprises an inventory operation, the operation information is further used for the first network element to determine a type of a terminal to be operated, the terminal to be operated comprises a first type of terminal and/or a second type of terminal, and the first type is different from the second type; and
receiving an operation result from the first network element, wherein the operation result comprises identifiers of one or more terminals, and the one or more terminals belong to the terminal to be operated,
wherein the operation result is determined based on first information and/or second information, the first information is used for a first reader to perform the inventory operation on the first type of terminal, and the second information is used for the first reader to perform the inventory operation on the second type of terminal.

17. The method according to claim 16, wherein
the operation information is carried in a first message, a message name of which indicates the type of the terminal to be operated; or
the operation information comprises first indication information that indicates the type of the terminal to be operated; or
the operation information comprises location information corresponding to the terminal to be operated, and the location information corresponding to the terminal to be operated is used to determine the type of the terminal to be operated; or
the operation information comprises an identifier of the terminal to be operated, and the identifier of the terminal to be operated is used to determine the type of the terminal to be operated; or
the operation information comprises identifier information indicating the service requester, and the identifier information indicating the service requester is used to determine the type of the terminal to be operated.

18. A communication apparatus, comprising a unit or module configured to implement the method according to any one of claims 1 to 17.

19. A communication apparatus, comprising at least one processor, wherein the at least one processor is configured to perform the method according to any one of claims 1 to 17.

20. A computer-readable storage medium storing computer instructions, wherein when the computer instructions are executed, the computer is enabled to perform the method according to any one of claims 1 to 17.

21. A computer program product comprising computer program code, wherein when the computer program code is run by a computer, the computer is enabled to perform the method according to any one of claims 1 to 17.

22. A chip, comprising at least one processor and an interface, wherein the processor is configured to read and execute instructions stored in a memory, and when the instructions are run, the chip is enabled to perform the method according to any one of claims 1 to 17.
